# EUROPÄISCHE PATENTSCHRIFT

(11) **EP 3 175 679 B1**
(45) Veröffentlichungstag und Bekanntmachung des Hinweises auf die Patenterteilung: **06.12.2023**
(21) Anmeldenummer: 15719729.4
(22) Anmeldetag: 05.05.2015
(51) Int. Cl.: H05B 47/19

(54) **STEUERUNGSANLAGE FÜR EIN BELEUCHTUNGSSYSTEM SOWIE VERFAHREN ZUR KONFIGURATION UND INBETRIEBNAHME DERSELBEN**
CONTROLSYSTEM FOR A LIGHTSYSTEM AND ITS METHOD FOR CONFIGURATION OF IT AND BRINGING IT IN SERVICE
INSTALLATION DE COMMANDE POUR UN SYSTÈME D'ÉCLAIRAGE AINSI QUE PROCÉDÉ SERVANT À CONFIGURER ET À METTRE EN SERVICE LADITE INSTALLATION DE COMMANDE

(30) Priorität: 28.07.2014 DE 102014110581
(43) Veröffentlichungstag der Anmeldung: 07.06.2017
(73) Patentinhaber: Trilux GmbH & Co. KG, 59759 Arnsberg (DE)
(72) Erfinder: MÜLLER, Sven, 58730 Frönenberg (DE)
(74) Vertreter: Lippert Stachow Patentanwälte Rechtsanwälte
(86) Internationale Anmeldenummer: PCT/EP2015/059874
(87) Internationale Veröffentlichungsnummer: WO 2016/015886

(56) Entgegenhaltungen:
- EP-A2- 2 512 209
- WO-A1-2006/033062
- DE-A1-102007 025 126
- DE-A1-102009 056 152
- DE-A1-102010 031 242

## Beschreibung

Die Erfindung betrifft ein System aufweisend eine Steuerungsanlage und ein Funknetz-Endgerät für ein Beleuchtungssystem, wobei die Steuerungsanlage einen Steuerungsadapter mit einer digitalen Schnittstelle und einem darüber an den Steuerungsadapter angeschlossenen und diesem zugeordneten digitalen Steuerbus, an dem eine Mehrzahl von lichttechnischen Betriebskomponenten, wie Betriebsgeräte, Vorschaltgeräte, Sensoreinrichtungen und/oder Schaltereinrichtungen mittels einer jeweiligen digitalen Schnittstelle als Busteilnehmer anschließbar sind. Der zumindest eine Steuerungsadapter weist ferner einen Controller sowie eine Funkschnittstelle zur Datenkopplung des Steuerungsadapters an ein Funknetzendgerät wie ein Smartphone, Tablet oder PC auf. Die Erfindung betrifft ferner ein Verfahren zur Konfiguration und Inbetriebnahme einer solchen Steuerungsanlage.

Ein derartiges Steuerungssystem ist beispielsweise in der europäischen Offenlegungsschrift EP 2 512 209 A2 offenbart. Ein solches System bietet insbesondere für komplexe Beleuchtungssysteme, welche sich grundsätzlich auch über mehrere Räume oder Hallen erstrecken können, eine hohe Flexibilität zur Anpassung der Steuerungsanlage an die jeweilige spezifische Beleuchtungsaufgabe, welche innerhalb eines solchen Beleuchtungssystems die unterschiedlichsten Anforderungen abdecken sollte.

Die Offenlegungsschrift DE 10 2009 056 152 A1 offenbart ein elektronisches System, beispielsweise umfassend eine Lichtquelle sowie ein zur drahtlosen Signalübertragung eingerichtetes Funknetz-Endgerät über welches der Betrieb der Lichtquelle, beispielsweise die Einstellung eines Dimmpegels oder eines Farbtons der Lichtquelle, gesteuert wird.

Auf dem Gebiet der Beleuchtungssysteme sind verschiedene digitale Steuerbusse bekannt, wobei sich die sogenannte DALI (Digital Addressable Lighting Interface)-Schnittstelle als quasi Standard zwischenzeitlich etabliert hat, sowohl im gewerblichen als auch im privaten Bereich. Ein DALI-System ist beispielsweise in der Offenlegungsschrift EP 1 643 815 beschrieben. Über ein DALI-Steuergerät, welches auch als DALI-Master bezeichnet wird, können bis zu 64 lichttechnische Geräte wie Leuchten, Sensoreinrichtungen oder Schaltereinrichtungen wie Taster an einen einzelnen Bus angeschlossen werden, sodass die Konfiguration und Parametrierung eines solchen Beleuchtungssystems in der Praxis kompliziert und insofern zeitaufwendig sein kann. Die Komplexität des Systems, insbesondere bei der Konfiguration kann prinzipiell beliebig zunehmen, wenn, wie in der angegebenen Offenlegungsschrift beschrieben, mehrere Steuerungsadapter zur Steuerung einer Mehrzahl von Leuchten mittels eines Netzwerkes zusammengeschaltet werden.

Der Erfindung liegt die Aufgabe zugrunde, ein herkömmliches Steuerungssystem für ein Beleuchtungssystem so auszugestalten, dass die Konfiguration und Parametrierung der Anlage bzw. des zugeordneten Beleuchtungssystems vereinfacht wird.

Diese Aufgabe löst die Erfindung vorrichtungsseitig mit einem System umfassend eine Steuerungsanlage und ein Funknetz-Endgerät mit den Merkmalen von Anspruch 1.

Der Begriff Steuerungsanlage umfasst alle Bauteile, welche zur Steuerung des Beleuchtungssystems dienen, das Beleuchtungssystem selbst umfasst alle Leuchten der Installation und die Steuerungsanlage.

Dabei kann der Steuerungsadapter zum Abtasten der an dem zugeordneten digitalen Bus wie ein DALI-Bus angeschlossenen Busteilnehmer bzw. lichttechnischen Betriebskomponenten veranlasst werden. Nach dieser Abtastung des digitalen Buses können die daran angeschlossenen Busteilnehmer bzw. lichttechnischen Betriebskomponenten direkt vom Steuerungsadapter angesprochen werden, insbesondere durch Angabe einer jeweils zugeordneten Adresse, wobei die Kommunikation zum Steuerungsadapter je nach Betriebskomponente auch bidirektional eingerichtet sein kann. Die Beleuchtungssystemvorlagen können vorbestimmt sein und werden für eine nachfolgende weitere Konfiguration/Zuordnung der Komponenten und/oder Parametrierung des Beleuchtungssystems zugrunde gelegt, wodurch sich die Konfiguration und/oder Inbetriebnahme des Beleuchtungssystems wesentlich erleichtert.

Dabei kann wie oben angegeben der Steuerungsadapter zum Abtasten der an dem zugeordneten DALI-Bus angeschlossenen Busteilnehmer veranlasst werden. Die so erfassten Betriebskomponenten werden dann mit den zu den Beleuchtungssystemvorlagen gespeicherten Betriebskomponenten durch das Funknetz-Endgerät prozessorgestützt verglichen und die Beleuchtungssystemvorlage aufgefunden, welche in Bezug auf ihre Betriebskomponenten die größten Überschneidungen aufweist. Die so gefundene Beleuchtungssystemvorlage wird wie bei der erstbeschriebenen Ausführungsform der nachfolgenden Konfiguration wie Gruppierung, Zuordnung und/oder Parametrierung von Betriebskomponenten des Beleuchtungssystems zugrunde gelegt.

Eine Gruppierung von Betriebskomponenten kann beispielsweise die logische Verknüpfung eines Tasters oder eines Dimmers zu einer Leuchte oder logische Verknüpfung eines Lichtsensors zu einer Leuchte oder auch die Zusammenfassung einer Mehrzahl von Leuchten sein.

Die erfindungsgemäß ausgebildete Steuerungsanlage kann die Konfiguration und die Inbetriebnahme insbesondere komplexer Beleuchtungssysteme stark erleichtern, da sie in dieser Ausführungsform zumindest teilweise automatisch erfolgen kann. Zweckmäßigerweise ist der Speicher zur Speicherung der von der Mehrzahl von Beleuchtungssystemvorlagen jeweils umfassten lichttechnischen Betriebskomponenten und zumindest einigen der den Betriebskomponenten zugeordneten Konfigurationen und/oder Parametrierungen im Funknetz-Endgerät wie einem Smartphone oder einem Notebook angeordnet. Hierdurch erübrigt sich das Herunterladen einer bzw. der Mehrzahl von Beleuchtungssystemvorlagen, beispielsweise von einem Internetserver durch das Funknetz-Endgerät. Beispielsweise können zweckmäßigerweise die zumindest eine Beleuchtungssystemvorlag zusammen mit dem Programmcode, insbesondere einer App zur Steuerung des Ablaufs des Konfigurierens und/oder des Inbetriebnehmens auf diesem Endgerät gespeichert sein. Bei dieser Gestaltung muss insofern der Programmcode einschließlich der Beleuchtungssystemvorlage(n) nur ein einzelnes Mal auf dem Endgerät gespeichert werden und steht nachfolgend für die Konfiguration und/oder dem Betrieb der Steuerungsanlage zur Verfügung.

Zweckmäßigerweise kann auch vorgesehen sein, dass das Funknetz-Endgerät eingerichtet ist, eine Datenverbindung zu einem Server wie einem Webserver einzurichten bzw. herzustellen, um Information über eine bzw. eine Mehrzahl von Beleuchtungssystemvorlagen von dem Server auf einen Speicher des Funknetz-Endgerätes herunterzuladen oder Daten eines konfigurierten Beleuchtungssystems an einen übergeordneten Datenserver zu übermitteln, sodass beliebige Beleuchtungssystemvorlagen am Funknetz-Endgerät zur Konfigurierung des Beleuchtungssystem bereitgestellt werden können bzw. ein konfiguriertes Beleuchtungssystem für andere Anwendungen bzw. Benutzer als Beleuchtungssystemvorlage zur Verfügung steht.

Vorteilhaft kann auch vorgesehen sein, dass die Ausgabedatei eines Lichtplanungsprogramm entweder direkt oder nach einer entsprechenden Anpassung der Ausgabedatei als Beleuchtungssystemvorlage auf einem Server wie einem Webserver abgelegt wird, auf den das Funknetz-Endgerätes Datenzugriff besitzt.

Zweckmäßigerweise kann das Funknetz-Endgerät eingerichtet sein, insbesondere durch einen entsprechenden Programmcode bzw. App, Sollwerte und/oder Funktionalitäten für erfasste Betriebskomponenten zum Konfigurieren des Beleuchtungssystems einzugeben, die nachfolgend in dem zumindest einen Steuerungsadapter zum Betrieb des Beleuchtungssystem abgelegt werden können. Beispielsweise kann darüber die Funktion eines Wandtasters festgelegt oder auch eine Schalter-Leuchten-Zuordnung vom Nutzer durchgeführt werden. In ähnlicher Weise kann auch vorgesehen sein, dass über das Endgerät Beleuchtungsszenen wie ein zeitlicher Ablauf einer Beleuchtung eingestellt werden, beispielsweise bei der Einschaltung einer Leuchte im Ansprechen d.h. als Antwort auf das Signal eines Präsenzsensors, welches die Präsenz einer Person anzeigt.

Erfindungsgemäß kann vorgesehen sein, dass über das Endgerät Beleuchtungssituationen wie ein oder mehrere Dimmpegel einer Leuchte oder einer Gruppe von Leuchten eingestellt werden, beispielsweise im Ansprechen d.h. als Antwort auf das Signal eines Lichtsensors und/oder in Abhängigkeit des Zweckes der Beleuchtung, z.B. für eine Videopräsentation oder zum Zwecke der Durchführung einer schriftlichen Prüfung einer größeren Anzahl von Teilnehmern. Darüber hinaus kann in einer untersten Bedienebene das Endgerät auch eingerichtet sein, den eigentlichen Betrieb des Beleuchtungssystems zu steuern, beispielsweise manuell am Endgerät und über einen Steuerbus betätigbare Taster oder Schalter auszulösen. Zweckmäßigerweise können diese Taster oder Schalter auch direkt manuell ausgelöst werden.

Die Steuerungsanlage umfasst einen Steuerungsadapter und den daran angeschlossenen digitalen Steuerbus, an welchem eine Mehrzahl von Betriebskomponenten angeschlossen ist. Insbesondere für komplexe Beleuchtungssysteme, welche eine große Anzahl von Betriebskomponenten aufweisen und/oder sich über mehrere Räume bzw. Hallen erstrecken, kann die erfindungsgemäße Steuerungsanlage auch eine Mehrzahl derartiger Steuerungsadapter mit jeweils einer digitalen Schnittstelle zum Anschluss an einen zugeordneten digitalen Steuerbus aufweisen. Grundsätzlich können diese Steuerungsadapter vorrichtungsseitig identisch aufgebaut sein, insbesondere derartig, dass jeder als Master an dem zugeordneten digitalen Steuerbus agiert und die Kommunikation auf dem zugeordneten Bus steuert, insbesondere gemäß dem IEC 62386 Standard, d.h. als DALI-Bus.

Grundsätzlich können eine vorgegebene Anzahl, insbesondere alle Steuerungsadapter der erfindungsgemäßen Steuerungsanlage im Rahmen eines Funknetzes vernetzt sein, beispielsweise gemäß dem IEEE 802.11 Standard als WLAN-Netz ausgebildet sein. Es liegt jedoch auch im Rahmen der Erfindung, die Vernetzung der Steuerungsadapter bzw. eine Datenkopplung mit dem Endgerät mittels anderer Funknetz-Standards auszuführen, beispielsweise ZigBee, 6LowPAN etc. oder als inhomogene Netzstruktur mit einer Kopplung derartiger unterschiedlicher Funknetze, wobei ein Teil der Steuerungsadapter beispielsweise über einen ersten Funknetzstandard und andere Steuerungsadapter über eine anderen Funknetzstandard gekoppelt sind.

Die spezifische Ausbildung des Funknetzes kann an das jeweilige Beleuchtungssystem angepasst sein. Beispielsweise ist es möglich, dass alle Steuerungsadapter der erfindungsgemäß ausgebildeten Steuerungsanlage als Client konfiguriert sind, welche über eine vorgegebene Basisstation (Wireless Access Point) an ein vorgegebenes Funknetz angekoppelt sind. Darüber hinaus ist es beispielsweise auch möglich, dass ein Steuerungsadapter als Basisstation konfiguriert ist, an welchem andere Steuerungsadapter als Wireless-Client angekoppelt sind. Dabei können die Steuerungsadapter der erfindungsgemäßen Steuerungsanlage ein eigenes Funknetz bilden oder wie beschrieben an ein vorgegebenes, beispielsweise ein Firmenfunknetz angeschlossen sein. Auch ist es im Rahmen der Erfindung möglich, ein solches Funknetzwerk, umfassend eine Mehrzahl von derartigen Steuerungsadaptern über einen Router, welcher entweder ein entsprechend konfigurierter Steuerungsadapter mit einer zusätzlichen LAN-Schnittstelle oder ein anderer Router zur Einkopplung in LAN, beispielsweise ein Firmen-LAN bereitstellt. In einer weiteren Ausführungsform kann auch vorgesehen sein, dass die erfindungsgemäße Steuerungsanlage eine Mehrzahl von unabhängigen Funknetzwerken umfasst, welche jeweils mehrere der beschriebenen Steuerungsadapter aufweisen, wobei das Funknetz-Endgerät ausgebildet sein kann, um sich in all diese Netze einzuwählen.

Es kann ferner vorgesehen sein, dass für jedes dieser Funknetze ein Steuerungsadapter als Basisstation bzw. Hotspot konfiguriert ist. Soweit die jeweiligen Steuerbusse als DALI-Busse ausgebildet sind, können die zugeordneten Steuerungsadapter als DALI-Master konfiguriert sein und insofern die Kommunikation und die Steuerung der an den zugeordneten DALI-Bus angeschlossenen maximal 64 Betriebskomponenten durchführen.
- Die der Erfindung zugrunde liegende Aufgabe wird darüber hinaus gelöst durch ein Verfahren zum Konfigurieren und/oder Inbetriebnehmen einer Steuerungsanlage eines erfindungsgemäßen Steuerungssystems für ein Beleuchtungssystem nach Anspruch 3.

Vor Beginn des erfindungsgemäßen Verfahrens wird in der Regel die Verkabelung des Beleuchtungssystems durchgeführt. Nach der Verkabelung bzw. der Installation des Beleuchtungssystems und dem Erfassen der an dem zumindest einen Steuerungsadapter über einen digitalen Bus angeschlossenen lichttechnischen Betriebskomponenten kann das erfindungsgemäße Verfahren entweder vollständig prozessorgestützt auf einem Funknetz-Endgerät, unter Umständen ergänzt durch manuelle Eingaben eines Nutzers über das Funknetz-Endgerät, erfolgen, wodurch die Konfiguration bzw. Inbetriebnahme einer Steuerungsanlage für ein Beleuchtungssystem stark vereinfacht bzw. die Konfiguration und Inbetriebnahme komplizierter Steuerungsanlagen bzw. Beleuchtungssystemen erst ermöglicht werden. Mit dem erfindungsgemäßen Verfahren kann durch die Verwendung von Beleuchtungssystemvorlagen dem Nutzer häufig ein Großteil der Konfigurationsarbeit abgenommen werden, wobei die eventuelle Komplexität eines vorliegenden Beleuchtungssystems dem Nutzer verborgen bleiben kann.

Zweckmäßigerweise können in der zumindest einen Beleuchtungssystemvorlage Angaben über eine geometrische Raumgestaltung wie die Anordnung von zumindest einer Fensterfront, Angaben über die Anordnung zumindest einer Türe, Angaben über die Anzahl bzw. die geometrische Anordnung von Gruppierung von Leuchten innerhalb des Raumes, Angaben über die Anzahl bzw. die geometrische Anordnung von Sensoreinrichtungen, Angaben über die Anzahl bzw. die geometrische Anordnung von Schaltereinrichtung innerhalb des Raumes und/oder Angaben über Beleuchtungsszenen abgespeichert werden. Diese Informationen können insbesondere auch zur Visualisierung der Beleuchtungssystemvorlage auf einem Bildschirm des Funknetz-Endgeräts verwendet werden.

Die Visualisierung der Beleuchtungssystemvorlage auf einem Display des Funknetz-Endgerät kann zweckmäßigerweise zur Erleichterung des Zuordnens der lichttechnischen Betriebskomponenten des Beleuchtungssystems zu den lichttechnischen Betriebskomponenten der abgespeicherten Beleuchtungssystemvorlage verwendet werden und nachfolgend zur weiteren Konfigurierung oder Parametrierung der lichttechnischen Betriebskomponenten des Beleuchtungssystems.

Es kann zweckmäßig sein, wenn nicht nur Informationen zur zumindest einen Beleuchtungssystemvorlage zur Visualisierung auf dem Funknetz-Endgerät verwendet werden, sondern auch eine Visualisierung der erfassten und an dem digitalen Steuerbus des zumindest einen Steuerungsadapters angeschlossenen lichttechnischen Betriebskomponenten auf dem Funknetz-Endgerät erfolgt, insbesondere beide zusammen auf einem, insbesondere einem gemeinsamen Bildschirm des Funknetz-Endgeräts angezeigt werden. In diesem Fall kann z.B. durch einfaches "Drag and Drop", manuell ausgeführt durch den Anwender an einem berührungsempfindlichen Bildschirm des Endgerätes oder mittels einer Eingabeeinrichtung, eine erleichterte Zuordnung der vom jeweiligen Steuerungsadapter erfassten lichttechnischen Betriebskomponenten des Beleuchtungssystems mit den lichttechnischen Betriebskomponenten der zumindest einen Beleuchtungssystemvorlage durchgeführt werden. Es kann vorgesehen sein, dass ein Benutzer eine auf dem Bildschirm angezeigte und am Digitalbus erfasste lichttechnische Betriebseinrichtung wie eine Leuchte bzw. ein Betriebsgerät einer Leuchte, ein Sensor oder eine Schaltereinrichtung markiert oder auswählt, wobei diese daraufhin durch das Konfigurationsprogramm wie eine App auf dem Funknetz-Endgerät zur Signalisierung angesteuert wird. Damit kann der Benutzer die Betriebskomponenten des realen Beleuchtungssystems den jeweiligen Betriebskomponenten einer Beleuchtungssystemvorlage zuordnen und diese Zuordnung z.B. durch eine "Drag and Drop"-Eingabe am Bildschirm für die weitere Konfiguration des Beleuchtungssystems festlegen bzw. dem Programm mitteilen.

Die Signalisierung der jeweiligen Betriebskomponente nach der Auswahl bzw. Markierung am Bildschirm kann im Falle von Betriebsgeräten von Leuchten bzw. Leuchten durch einfaches Bestromen des jeweiligen Leuchtmittels, im Falle von Sensoren bzw. Schaltern beispielsweise durch Ansteuern einer jeweiligen Signalisierungs-LED durchgeführt werden, die am Sensor bzw. Schalter vorgesehen ist.

In ähnlicher Weise kann die weitere Konfigurierung bzw. Parametrierung der lichttechnischen Betriebskomponenten des Beleuchtungssystems erleichtert werden, z.B. im Hinblick auf die Eingabe von Einstellparameter für Präsens- und Lichtsensoren, Dimmpegel für Betriebsgeräte oder Leuchten bzw. Leuchtengruppen, das Einstellen von Beleuchtungssituationen und Beleuchtungsszenen, etc..

Dem Schritt des Auswählens einer Beleuchtungssystemvorlage für das nachfolgende bzw. weitergehende Konfigurieren bzw. Parametrieren des Beleuchtungssystems geht der Schritt voraus dass die Beleuchtungssystemvorlage ermittelt, d.h. identifiziert wird, welche die größten Übereinstimmungen mit dem ermittelten Aufbau des aktuellen Beleuchtungssystems nach den vorbestimmten Kriterien aufweist. Dabei kann ein vorbestimmtes Kriterium beispielsweise die Anzahl der erfassten lichttechnischen Betriebskomponenten und/oder die Art dieser Betriebskomponenten des zu konfigurierenden Beleuchtungssystems sein. Beispielsweise kann das System aufgrund von Informationen über die Art der Leuchten und/oder von Schaltern, Sensoren etc. Hinweise darüber gewinnen, welche der abgespeicherten Beleuchtungssystemvorlagen in Frage kommt und daraufhin allein prozessorgestützt oder unter Berücksichtigung zusätzlicher manueller Eingaben des Benutzers eine der abgespeicherten Beleuchtungssystemvorlagen auswählen und der weiteren Konfiguration bzw. Parametrierung des vorliegenden Beleuchtungssystems zugrunde legen.

Um dem Nutzer schon auf einer niedrigen Konfigurationsebene eine Möglichkeit zur manuellen Eingabe bereitzustellen, wird in einer erfinderischen Ausführungsform vorgesehen, dass dem Schritt des Auswählens einer Beleuchtungssystemvorlage der Schritt vorgeht, dass eine Mehrzahl von abgespeicherten Beleuchtungssystemvorlagen mit den größten Übereinstimmungen nach den vorbestimmten Kriterien ermittelt, d.h. identifiziert wird und eine Listung von Beleuchtungssystemvorlagen nach der Größe der Übereinstimmung in Bezug auf die vorbestimmten Kriterien durchgeführt und dem Nutzer zur Auswahl angezeigt wird. Dies erfolgt auf einem Display an dem Funknetz-Endgerät, an welchem der Nutzer dann die Beleuchtungssystemvorlage auswählt, welche der weiteren Konfiguration des bestehenden Beleuchtungssystems bzw. der bestehenden Steuerungsanlage zugrunde liegt. Es kann vorgesehen sein, dass die Beleuchtungssystemvorlage zum Konfigurieren des Beleuchtungssystems manuell aus der Listung ausgewählt wird.

Dabei kann das jeweilige Erfassen der an dem zugeordneten Steuerbus eines Steuerungsadapters angeschlossenen lichttechnischen Betriebskomponenten durch einen vom Steuerungsadapter als DALI-Master angestoßenen DALI-Scan auf dem jeweiligen Steuerbus durchgeführt werden. Die so ermittelten Betriebskomponenten werden dann vom Steuerungsadapter mittels einer Datenverbindung über das Funknetzwerk an das Funknetz-Endgerät übermittelt werden, von welchem die Konfiguration und/oder Inbetriebnahme der Steuerungsanlage erfolgen kann. Dabei kann die Durchführung des Dali-Scans vom Funknetz-Endgerät an dem jeweiligen Dali-Steuerungsadapter angefordert werden.

Das weitere Konfigurieren bzw. Parametrieren des Beleuchtungssystems kann beispielsweise das Einstellen vorgegebener Sollwerte, wie Dimmwerte, Sensorenwerte etc., jedoch auch das Gruppieren von einer Mehrzahl von Leuchten bzw. Leuchten und Sensoren und/oder Leuchten mit Schalteinrichtungen wie Taster umfassen.

Zweckmäßigerweise kann das Einrichten eines Funknetzwerkes für die erfindungsgemäße Steuerungsanlage das Abtasten eines vorgegebenen Funknetz-Frequenzbereichs zur Ermittlung von Funknetz-Teilnehmern umfassen, welche als Basisstation (Wireless Access Point) oder Drahtlos-Router konfiguriert und als Steuerungsadapter datentechnisch erkennbar sind, insbesondere durch Angabe einer, einem Steuerungsadapter zugeordneten eindeutigen Kennung; ferner das Auswählen einer Untermenge oder aller ermittelten Steuerungsadapter und Konfigurieren der ermittelten Steuerungsadapter als einem bestimmten Funknetz zugehöriger Funknetz-Teilnehmer. Zu diesem Zweck kann vorgesehen sein, dass alle Steuerungsadapter der Steuerungsanlage zunächst als Basisstation (Wireless Access Point) bzw. Hotspot konfiguriert sind und vom Funknetz-Endgerät ein WLAN-Scan durchgeführt wird zur Erfassung der verfügbaren Basisstationen bzw. Steuerungsadapter. Daraufhin kann die Einrichtung eines einzelnen oder mehrerer Funknetzwerke mit jeweils zugeordneten Steuerungsadaptern durchgeführt werden in Abhängigkeit der gewünschten Funknetz-Infrastruktur. Diese Funknetzstruktur kann auf das jeweilige Beleuchtungssystem angepasst sein, beispielsweise in Form einer Mesh-Struktur nach IEEE 802.11s, eines einzelnen Funknetzes, bei welchem ein Steuerungsadapter als Basisstation und die anderen Steuerungsadapter als Clients konfiguriert sind, oder in Form der Anordnung einer Mehrzahl von Subnetzen, die sich beispielsweise jeweils auf einen einzelnen Raum oder eine einzelne Halle beziehen, wobei diese Subnetze entweder unabhängig voneinander oder über ein übergeordnetes WLAN miteinander gekoppelt sein können.

Zweckmäßigerweise kann das Auswählen von Steuerungsadaptern zur Zuordnung zu einem bestimmten Funknetz oder Subnetz für jeden ermittelten Steuerungsadapter die Schritte umfassen:
- Anzeigen des ermittelten Steuerungsadapters auf einem Display durch ein zugeordnetes Symbol, auf einem Display des Funknetz-Endgeräts;
- Markieren des dem Steuerungsadapter zugeordneten Symbols auf dem Display durch einen Benutzer;
- Ansteuern des auf dem Bildschirm markierten Steuerungsadapters zur Abgabe eines optischen und/oder akustischen Signals, insbesondere am Steuerungsadapter selbst oder durch Betriebskomponenten wie Leuchten oder Lampen speisende EVGs, die an dem digitalen Steuerbus des Steuerungsadapter angeschlossen sind;
- im Ansprechen auf eine erfasste Signalisierung: Auswählen des Steuerungsadapters durch den Benutzer als zum Funknetzteil gehöriger Steuerungsadapter, wobei im Ansprechen auf eine nicht erfasste Signalisierung, der jeweilige Steuerungsadapters durch den Benutzer nicht als zum Funknetzteil gehöriger Steuerungsadapter ausgewählt wird.

Durch die vorgegebenen Verfahrensschritte kann erreicht werden, dass ein Benutzer die innerhalb seines visuellen und/oder auditiven Sinnesbereichs wie beispielsweise einem Raum liegenden Steuerungsadapter bzw. die über den jeweils zugeordneten Steuerbus angeschlossenen Betriebskomponenten optisch bzw. akustisch erkennt, sodass der Steuerungsadapter als einem vorgegebenen Funknetzwerk zugehörig ausgewählt werden kann.

Ein derartiges Vorgehen kann beispielsweise in solchen Fällen zweckmäßig sein, bei welchen in einem Raum bzw. einer Halle befindliche lichttechnische Betriebskomponenten in einem gemeinsamen Netzwerk durch Vernetzen der zugeordneten Steuerungsadapter zusammengeschaltet werden, wobei die gesamte Steuerungsanlage ein einzelnes eines solchen Netzwerkes oder auch mehrere derartiger Netzwerke bzw. Subnetze aufweisen kann, wobei letztere die in einem einzelnen Raum oder einer Halle befindlichen Steuerungsadapter umfassen können.

Bestimmte Konfigurationen eines derartigen Netzwerkes für die erfindungsgemäße Steueranlage sind zweckmäßig. Beispielsweise können alle ausgewählten Steuerungsadapter zu einem Netzwerk-Client umkonfiguriert werden, wobei ein einzelner Steuerungsadapter weiter als Basisstation konfiguriert bleiben kann und damit als Accesspoint oder Hotspot für die Clients dient, d.h. im Falle eines WLANs nach dem IEEE802.11 Standard für beispielsweise acht Clients. Soweit der digitale Steuerbus als DALI-Bus ausgebildet ist, kann ein derartiges Netzwerk insgesamt 9 x 64 = 576 lichttechnische Betriebskomponenten wie Betriebsgeräte bzw. Vorschaltgeräte für Leuchten, Schalter, EVGs, Sensoren etc. umfassen, welche jeweils an einem der neun DALI-Busse über eine zugeordnete DALI-Schnittstelle angeschlossen sein können.

Um zu vermeiden, dass Unbefugte in ein wie beschrieben aufgebautes Funknetzwerk eindringen, kann zweckmäßigerweise vorgesehen sein, dass bei der Konfiguration eines Funknetzwerks der Steuerungsanlage die Authentizität eines ermittelten Steuerungsadapters verifiziert wird, insbesondere durch Nutzereingabe bzw. Einlesen und Überprüfung eines dem Steuerungsadapter zugewiesenen öffentlichen Schlüssels. Dieser öffentliche Schlüssel kann beispielsweise im Steuerungsadapter selbst überprüft werden, sodass in dieser Ausführungsform sich jeder Steuerungsadapter selbst authentifiziert. Hierzu kann ein gerätespezifisches Zertifikat in jedem Steuerungsadapter abgelegt sein, der öffentliche Schlüssel kann beispielsweise zur Ablesung oder zum Abscannen außen am Gehäuse des Steuerungsadapters angebracht sein. Das erfindungsgemäße Verfahren kann dabei derart ausgebildet sein, dass das Auswählen eines Steuerungsadapters als zum Funknetzwerk gehöriger Steuerungsadapter durch eine Benutzereingabe oder automatisch durch ein Programm erst möglich ist, nachdem die Verifizierung der Authentizität des Steuerungsadapters durchgeführt wurde.

Zweckmäßigerweise kann der öffentliche Schlüssel beispielsweise durch eine alphanumerische Eingabe des Benutzers oder durch eine QR-Scannung durch den Benutzer erfolgen. In einer anderen Ausführungsform kann auch vorgesehen sein, den öffentlichen Schlüssel von einer sicheren Seite, beispielsweise von einem gesicherten Webserver direkt auf das Funknetz-Endgerät zu laden, sodass dieser zur Überprüfung der Authentizität der jeweiligen Steuerungsadapter zur Verfügung steht.

In einer besonders sicheren Ausführungsform kann auch vorgesehen sein, dass Bauteile der erfindungsgemäßen Steuerungsanlage Zugang zu einer sogenannten Public-Key-Infrastruktur (PKI) besitzen, d.h. Zugang zu einem System, das digitale Zertifikate ausstellen, verteilen und prüfen kann. Eine ansonsten notwendige Nutzeraktion in Form einer Eingabe oder beispielsweise in Form des Einlesens eines QR-Codes kann bei dieser Ausführungsform entfallen, sodass einerseits die Wahrscheinlichkeit für das Auftreten von Fehlern bei der Benutzereingabe und andererseits die Sicherheit gegenüber einem unberechtigten Eindringen in die Steuerungsanlage durch eine derartige Ausprägung des erfindungsgemäßen Verfahrens erhöht wird.

Zweckmäßigerweise kann bei dem erfindungsgemäßen Verfahren vorgesehen sein, dass nach der Fertigstellung der Konfigurierung und/oder Parametrierung des Beleuchtungssystems Daten dieses neu administrierten Beleuchtungssystems zur Aktualisierung bzw. Erweiterung einer abgespeicherten Beleuchtungssystemvorlage verwendet werden, sodass diese Informationen bei einer nachfolgenden Konfiguration bzw. Inbetriebnahme einer Steuerungsanlage für ein Beleuchtungssystem herangezogen werden kann. Ferner kann vorgesehen sein, dass nach der Fertigstellung der Administration Konfigurations- bzw. Parametrierungsdaten dieses Beleuchtungssystems als weitere Beleuchtungssystemvorlage abgespeichert wird, insbesondere in einem öffentlich zugänglichen Webserver, von welchem die Beleuchtungssystemvorlagen in ein Funknetz-Endgerät downloadbar sind.

Die Erfindung umfasst ferner ein Funknetz-Endgerät sowie ein Steuerungsadapter für die erfindungsgemäße Steuerungsanlage bzw. zur Durchführung des Verfahrens zum Konfigurieren und/oder Inbetriebnehmen der Steuerungsanlage für ein Beleuchtungssystem, wobei sowohl das Funknetz-Endgerät als auch der Steuerungsadapter ein Speichermedium aufweisen, auf welchem ein jeweiliger Programmcode zur Durchführung des erfindungsgemäßen Verfahrens gespeichert ist.

Das Funknetz-Endgerät weist dabei zumindest ein Display, eine Eingabeeinrichtung sowie einen Controller auf, welcher durch den im Speichermedium gespeicherte und im Controller ablaufende Programmcode zur beschriebenen Konfigurierung und/oder Inbetriebnahme bzw. zum Betrieb der Steuerungsanlage ausgebildet ist. Dabei kann Softwarecode auf dem Endgerät wie einem Smartphone ablaufen zur Kommunikation mit den Steuerungsadaptern, in der Regel auf der Protokollbasis von TCP/UDP in Verbindung mit einer Verschlüsselung. Eine weitere Möglichkeit besteht in der Einrichtung einer Kommunikation auf der Basis einer TCP-Server/Client-Verbindung, insbesondere unter Nutzung eines herkömmlichen Protokolls, wie beispielsweise XML over REST. Darüber hinaus kann bei einer solchen TCP-Server-Client-Verbindung zwischen dem Endgerät und einem Steuerungsadapter das Protokoll JSON over REST genutzt werden, wobei das letztgenannte Protokoll zur App-Entwicklung auf Netbooks/Smartphones in Bezug auf seine Lesbarkeit besonderes gut geeignet ist und ferner zugeordnete Parser-Engines bereits existieren, was die Softwareentwicklung erleichtert.

Zweckmäßigerweise kann vorgesehen sein, die Kommunikation zwischen dem bzw. den Steuerungsadaptern und dem Funknetz-Endgerät beispielsweise über SS1 durchzuführen, womit eine benutzerspezifische Zugriffskontrolle mit gesicherter Übertragung bereitgestellt werden kann. Dabei können in einer Ausführungsvariante in dem bzw. den Steuerungsadaptern die jeweiligen Passwörter der zulässigen Benutzer sowie die IP-Adressen abgelegt sein, auf welche der jeweilige Benutzer zugreifen darf. Durch die Kontrollerzeugung eines hash-Schlüssels mittels des in seinem Speicher abgelegten Passworts kann der jeweilige Steuerungsadapter die Authentifizierung des Funknetz-Endgeräts durchführen.

Auf dem Endgerät ablaufender Programmcode stellt neben der Kommunikation mit den Steuerungsadaptern, der eigentlichen Steuerung des erfindungsgemäßen Verfahrens auch die graphische Benutzeroberfläche (GUI) für den Nutzer bereit. Darüber hinaus kann auch ein Programmmodul vorgesehen sein zur Aktualisierung von Programmcode, insbesondere zur Durchführung des erfindungsgemäßen Verfahrens, beispielsweise zum Verbinden mit einem Webbrowser, welcher diese Information zum Herunterladen auf das Endgerät bereitstellt. Ferner kann das Endgerät einen Web-Server aufweisen, über den Steuerungsadapter jeweilige Softwareaktualisierungen herunterladen können. Hierzu kann die auf dem Endgerät ablaufende App den jeweiligen Steuerungsadapter über das Update informieren.

Auf dem Steuerungsadapter sind zunächst Programmmodule zur Bereitstellung einer Master-Funktionalität für den digitalen Bus, beispielsweise dem DALI-Bus gemäß IEC62386 gespeichert. In Abhängigkeit der Typen der an dem jeweiligen digitalen Steuerbus angeschlossenen lichttechnischen Betriebskomponenten, deren Gruppierung, der eingestellten Beleuchtungsszenen und Beleuchtungssituationen, d.h. in Abhängigkeit der Konfiguration und/oder Parametrierung des Beleuchtungssystems können die zugeordneten Programmcodemodule auf der Basis eines modularen Ansatzes zu einer angepassten Applikation auf dem jeweiligen Steuerungsadapter abgelegt bzw. verschaltet werden. Auf diese Weise kann erreicht werden, dass im jeweiligen Steuerungsadapter ein auf die an diesem angeschlossenen Betriebskomponenten und an die Konfiguration des Systems angepasster Steuerungsprogrammcode abgelegt ist. Die für eine vorgegebene Konfiguration der am Steuerbus angeschlossene Busteilnehmer angepasste Programmmodule können dabei in einer Ausführungsform durch den Steuerungsadapter vom Web-Server heruntergeladen werden, welcher wie beschrieben vom Funknetz-Endgerät bereitgestellt werden kann.

Insbesondere können Sensoren mittels frei verschaltbaren Programmmodulen Beleuchtungseffekte an Leuchten auslösen, wobei durch den modularen Ansatz verschiedene Module miteinander verschaltet oder bei einer Umgruppierung der Betriebskomponenten, beispielsweise durch die Angabe anderer Eingangsparameter, das modular aufgebaute Programm angepasst werden kann.

Zur Kommunikation zwischen einzelnen Steuerungsadaptern können diese jeweils auch einen Webserver umfassen, wobei die Kommunikation über das Funknetzwerk, beispielsweise ein WLAN, mittels des Hypertext-Übertragungsprotokolls (HTTP) durchgeführt werden kann. Der Datentransport für die Anwendung erfolgt dabei in der Regel über TCP/IP.

Wie der Fachmann erkennt, weist die erfindungsgemäße Steuerungsanlage für ein Belichtungssystem in der Regel keine zentrale Steuereinheit auf, stattdessen ist die Steuerintelligenz der Anlage über alle Steuerungsadapter verteilt. Ein Ausfall einzelner Bauteile kann insofern in keinem Fall den Ausfall der gesamten erfindungsgemäßen Steuerungsanlage zur Folge haben.

Die erfindungsgemäße Steuerungsanlage bzw. das erfindungsgemäße Verfahren zum Administrieren einer Steuerungsanlage für ein Beleuchtungssystem bzw. zu deren Betrieb wird durch das Beschreiben einiger Ausführungsformen unter Bezugnahme auf die beiliegenden Figuren erläutert, wobei
- Figur 1: in einer Prinzipskizze eine Steuerungsanlage für ein Beleuchtungssystem,
- Figur 2: ein, in einem erfindungsgemäßen Steuerungsadapter implementiertes Softwarekonzept mit frei verschaltbaren Softwaremodulen in einer Prinzipskizze,
- Figur 3: eine beispielhafte Verschaltung von Softwaremodulen für den Steuerungsadapter,
- Figur 4: eine in Bezug auf ihre Konfigurierung beispielhafte Beleuchtungssystemvorlage in einer Prinzipskizze,
- Figur 5: eine weitere, in Bezug auf ihre Konfigurierung beispielhafte Beleuchtungssystemvorlage in einer Prinzipskizze,
- Figur 6: das erfindungsgemäße Verfahren zum Administrieren bzw. Konfigurieren und/oder Inbetriebnehmen einer Steuerungsanlage für ein Beleuchtungssystem in einem Ablaufdiagramm in einer Prinzipdarstellung,
- Figuren 7a - c: die Ablaufschritte 400, 500 der Darstellung gemäß Figur 6 aus Softwaresicht,
- Figur 8: eine beispielhafte WLAN-Infrastruktur einer erfindungsgemäß ausgebildeten Steuerungsanlage,
- Figur 9: eine weitere WLAN-Infrastruktur für eine erfindungsgemäß ausgebildete Steuerungsanlage,
- Figur 10: eine beispielhafte Visualisierung einer Beleuchtungssystemvorlage zusammen mit erfassten Betriebskomponenten auf einem Bildschirm eines Funknetz-Endgerät zur interaktiven Konfiguration des Beleuchtungssystems,
- Figur 11: eine weitere Visualisierung entsprechend Fig. 10 zur Gruppierung der erfassten Leuchten nach der Beleuchtungssystemvorlage,
- Figur 12: eine weitere Visualisierung entsprechend Fig. 11, in welcher die erfassten Leuchten gruppiert sind,
- Figur 13: eine weitere Visualisierung entsprechend den Figuren 10, 11, 12, in welcher Beleuchtungsszenen verwaltbar, und
- Figur 14: eine Visualisierung entsprechend Fig. 13, in welcher eine neue Beleuchtungsszene interaktiv einrichtbar ist,
zeigt.

Die nachfolgende Beschreibung der Erfindung bezieht sich auf eine Ausbildung der erfindungsgemäßen Steuerungsanlage für ein Beleuchtungssystem, bei die Steuerungsadapter in ein WLAN-Netzwerk nach IEEE802.11 Standard und EN300328 integriert sind und darüber hinaus die Steuerungsadapter als DALI-Master gemäß IEC62386 Standard ausgebildet und eingerichtet sind, um die an den jeweiligen DALI-Bus angeschlossenen lichttechnischen DALI-Betriebskomponenten zu steuern. Die Erfindung ist dabei nicht auf die Verwendung bestimmter Typen von DALI-Betriebskomponenten beschränkt.

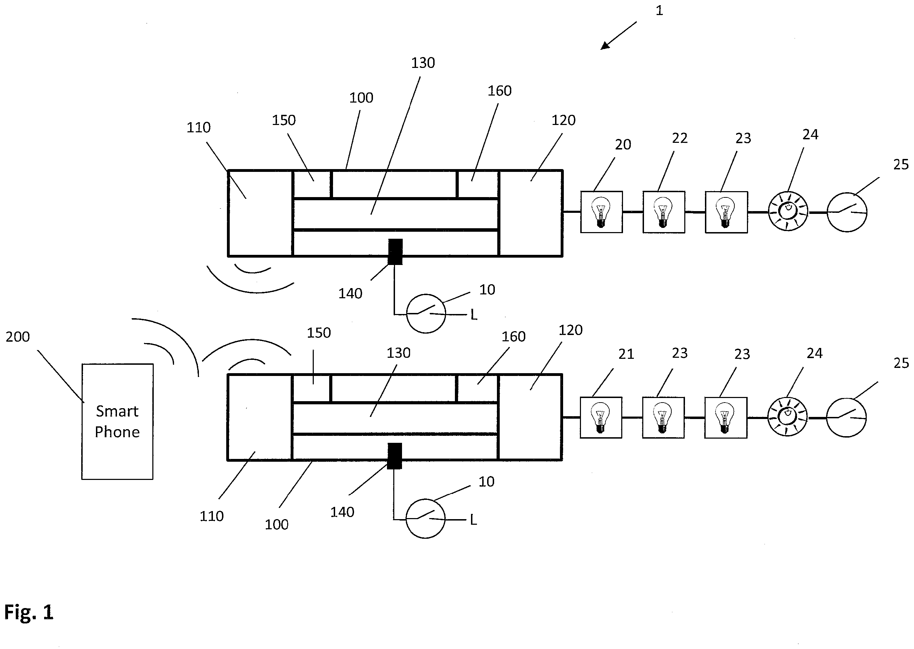

Figur 1 zeigt in einer Prinzipdarstellung eine solche Steuerungsanlage 1, umfassend zwei Steuerungsadapter 100, die jeweils zum einen ein WLAN-Modul 110 zur Kopplung mit einem WLAN-Netz, ein DALI-Modul 120 zur Kopplung an einen DALI-Steuerbus, einen Controller 130 sowie einen Tastereingang 140 aufweist, welcher an einem Taster 10 anschließbar ist. An die jeweiligen DALI-Busse sind über entsprechende digitale Schnittstellen unterschiedliche lichttechnische Betriebskomponenten als Busteilnehmer wie Leuchten 20 - 23 bzw. deren Betriebsgeräte bzw. Vorschaltgeräte, Sensoren 24,

Schalter 25 etc. mit einer DALI-Schnittstelle anschließbar. Ferner umfassen die in Fig. 1 dargestellten Steuerungsadapters 100 eine Systemtakteinheit 150 und ein Erweiterungsmodul 160. Dieses Erweiterungsmodul hält weitere Eingabe-/Ausgabeklemmen und zugeordnete Treibereinrichtungen bereit, beispielsweise in Form eines USB-Abschlusses oder weiterer Funk-Transceiver wie ZigBee-Transceiver oder 6LowPAN-Transceiver. In der beschriebenen Ausführungsform ist zum Konfigurieren bzw. Inbetriebnehmen sowie zur zentralen Eingabe von Betriebsparametern ein WLAN-Endgerät in Form eines Smartphones 200 vorgesehen.

Die beschriebene Gestaltung der Steuerungsanlage 1 ermöglicht über das Smartphone 200 die Administration über ein zentrales und mobiles Gerät. In der beschriebenen Ausführungsform ist das WLAN-Modul als Netzzugangsmodul ausgebildet entsprechend den beiden Schichten Bit-Übertragung und Sicherung gemäß dem OSI-Schichtenmodell, die diesbezügliche Software (TCP/IP-Schichten, Internet, Transport und Anwendungen) laufen über den Controller 130. In der beschriebenen Ausführungsform ist die Systemtakteinheit 150 eine vom Controller 130 getrennte Baueinheit, sie kann jedoch auch Bestandteil des Controllers bzw. des zugeordneten Prozessors sein.

Das DALI-Modul 120 stellt den DALI-Master für den angeschlossenen digitalen Steuerbus bereit und ist insofern eingerichtet, physikalisch die Daten entsprechend dem DALI-Standard auf den Bus zu legen, ferner ist es eingerichtet, um DALI-Kommandos, Adressenwürfel, Schalten, Dimmen, Szenen, Gruppen und Fadezeiten zu implementieren. Für die Entlastung des Controllers 130 stellt das DALI-Modul 120 ferner ein Interface für die Steuerung der angeschlossenen DALI-Geräte bereit. Der Controller 130 verarbeitet Programmcode und stellt darüber insbesondere die folgenden Funktionalitäten wie den Netzwerkknoten für das WLAN, die Verwaltung der Kommunikation zwischen dem jeweiligen Steuerungsadapter 100 und dem Smartphone 200, insbesondere im Rahmen einer TCP-Server/Client-Verbindung mit dem Protokoll JSON over REST, diverse Regelalgorithmen zur Betriebssteuerung der an den jeweiligen DALI-Bus angeschlossenen Betriebskomponenten, eine notwendige Datenhaltung in Bezug Lichtszenen, Gruppierungen von Betriebskomponenten, Beschreibung des Steuerungsadapters, sowie eine Geräteliste bereit. Darüber hinaus ist der Controller eingerichtet zur Verteilung von Updates, insbesondere OTA (Over the Air)-Updates für das WLAN-Modul, den Controller selbst, die angeschlossenen Sensorgeräte und/oder unter Umständen das Erweiterungsmodul 160.

In der beschriebenen Ausführungsform sind die Steuerungsadapter 100 eingerichtet, um prinzipiell alle DALIkompatiblen Sensorik- und Aktorikeinrichtungen, d.h. alle DALI-Gerätetypen zu steuern, wie Leuchten, Lichtsensoren, Bewegungssensoren, Taster, Wertegeber wie Dimmer etc., Vorschaltgeräte oder auch Betriebskomponenten für Farbkonverter.

Das Software-Update eines Steuerungsadapters ist vorliegend über die im Smartphone ablaufende APP durchführbar, beispielsweise dadurch, dass die aktuelle Version des Steuerungsadapters durch die App ausgelesen wird. Die App kann dem Steuerungsadapter über ein mögliches Update und ferner darüber informieren, wo über einen Webserver des Smartphones das Update heruntergeladen werden kann. Der Steuerungsadapter oder das Smartphone lädt das Update herunter, wobei das Update nach erfolgreichem, verifiziertem Download im Steuerungsadapter angewendet wird, danach kann die neue Software starten. Zweckmäßigerweise werden beim Neustart die ursprünglichen Einstellungen, insbesondere Gruppierungen und Parametrierungen der am jeweiligen DALI-Bus angeschlossenen Betriebskomponenten übernommen.

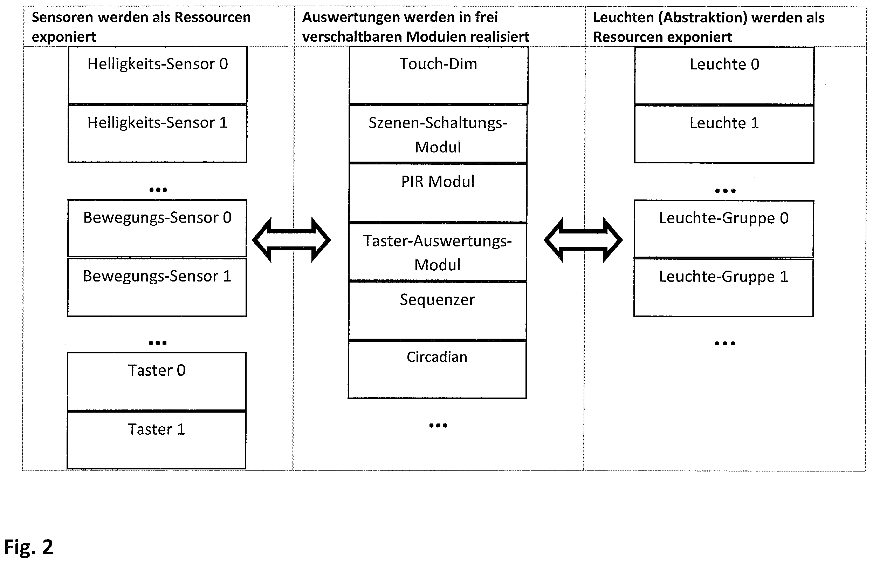

Bei einer Betrachtung des Steuerungsadapters im Hinblick auf die auf diesem implementierte Steuerungssoftware für angeschlossene DALI-Betriebskomponenten wird bei der beschriebenen Ausführungsform des erfindungsgemäßen Verfahrens das Konzept frei verschaltbarer (Software) Module umgesetzt, auf der Basis dessen Sensoren im Betrieb Effekte auf angeschlossenen Leuchten auslösen. Dieses grundlegende Konzept ist in Figur 2 dargestellt, wobei Sensoren und Leuchten jeweils als Ressourcen exponiert sind, welche Ausgangsparameter an die verschalteten Applikationsmodule übermitteln, welche ausgangsseitig die Leuchten steuert. Wie erkennbar, kann die Applikation des Steuerungsadapters zur Steuerung der angeschlossenen DALI-Betriebskomponenten in Abhängigkeit der verwendeten Sensoren und Aktuatoren (insbesondere Leuchten bzw. Vorschaltgeräte) durch die jeweiligen modularen Programmteile zusammengesetzt werden.

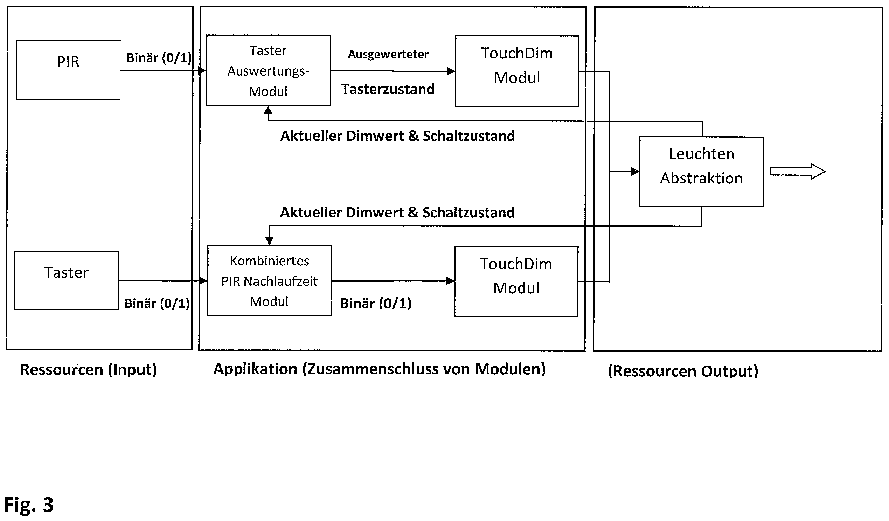

Figur 3 zeigt einen solchen spezifischen Aufbau einer Applikation durch Verschaltung einer Mehrzahl von Softwaremodulen in einem erfindungsgemäßen Steuerungsadapter 100 für ein System mit einem Präsenzmelder (PIR) und einem Taster, wobei eine Präsenzdetektion mit einer Touch-Dimm-Funktionalität verbunden wird. Solange die Präsenz eines Benutzers angezeigt wird, kann mit dieser Verschaltung der Dimmgrad durch Druck des Tasters verändert werden. Hierzu wird in dem Programmteil "Ressourcen (Output)" das entsprechende DALI-Kommando erzeugt und über das DALI-Modul 120 ausgegeben.

Allgemein kann für einige, insbesondere für jede lichttechnische Betriebskomponente bzw. für eine oder mehrere Funktionen einer solchen Betriebskomponente ein solches Softwaremodul vorgesehen sein, wobei diese Softwaremodule zur Bereitstellung einer vorgegebenen Betriebssteuerung des jeweiligen Steuerungsadapters zusammengeschaltet und im Steuerungsadapters als Betriebsprogramm abgelegt werden. Das Zusammenschalten dieser Softwaremodule und/oder die Ablage im zugeordneten Steuerungsadapter kann nach der Fertigstellung der Konfiguration von dem Funknetz-Endgerät durchgeführt bzw. gesteuert werden.

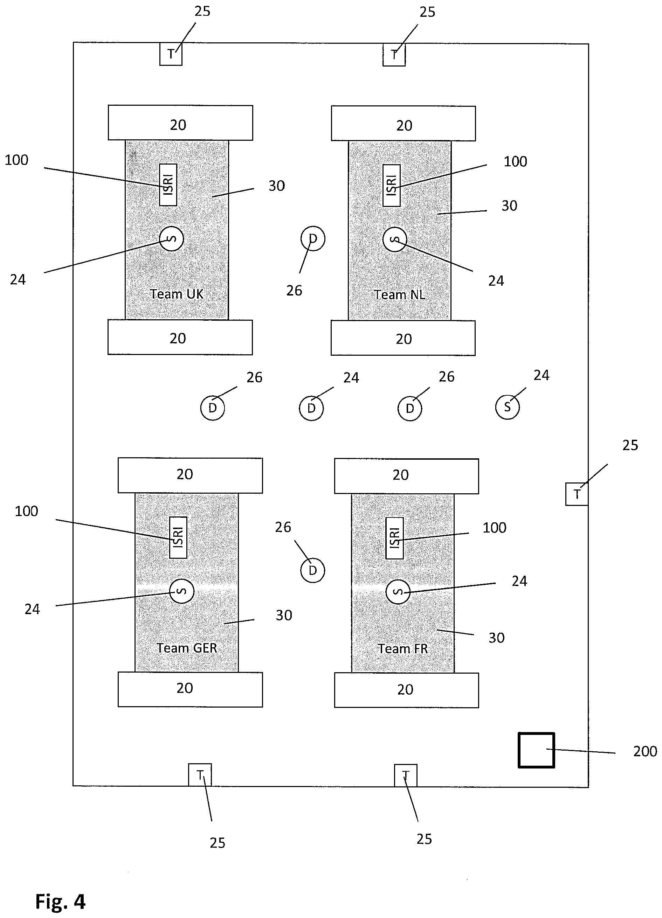

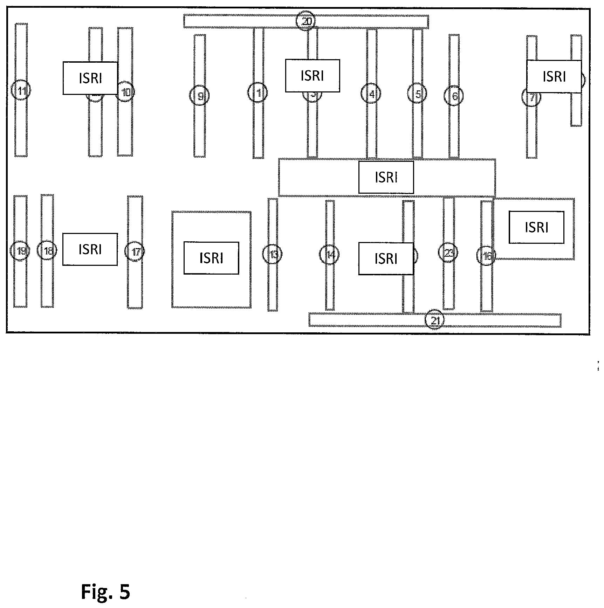

Die Figuren 4, 5 zeigen in einer Prinzipskizze beispielhafte Beleuchtungssysteme mit erfindungsgemäß ausgebildeten Steuerungsanlagen, die nach dem erfindungsgemäßen Verfahren administriert, d.h. konfiguriert, parametriert und/oder in Betrieb genommen bzw. betrieben werden können. Dabei zeigt Figur 4 den grundsätzlichen Aufbau eines Beleuchtungssystems im Falle eines Großraumbüros, umfassend eine Vielzahl von Steuerungsadaptern 100, Leuchten 20 zur Ausleuchtung von Tischbereichen 30, Schalter bzw. Taster 25, Lichtsensoren 24 und Präsenzsensoren 26. Figur 5 zeigt den beispielhaften Aufbau eines Beleuchtungssystems für die Etage eines Geschäftes, beispielsweise eines Baumarktes, umfassend eine Vielzahl von mit dem Bezugszeichen ISRI gekennzeichneten Steuerungsadaptern und jeweils zugeordneten DALI-Betriebskomponenten wie Leuchten, Taster, Schalter, Licht und Präsenzsensoren. Die Systeme umfassen in der Regel Betriebskomponenten wie beispielsweise Leuchten und Sensoren, die spezifisch für den jeweiligen Anwendungsfall, z.B. hohe Decken, ausgewählt sind.

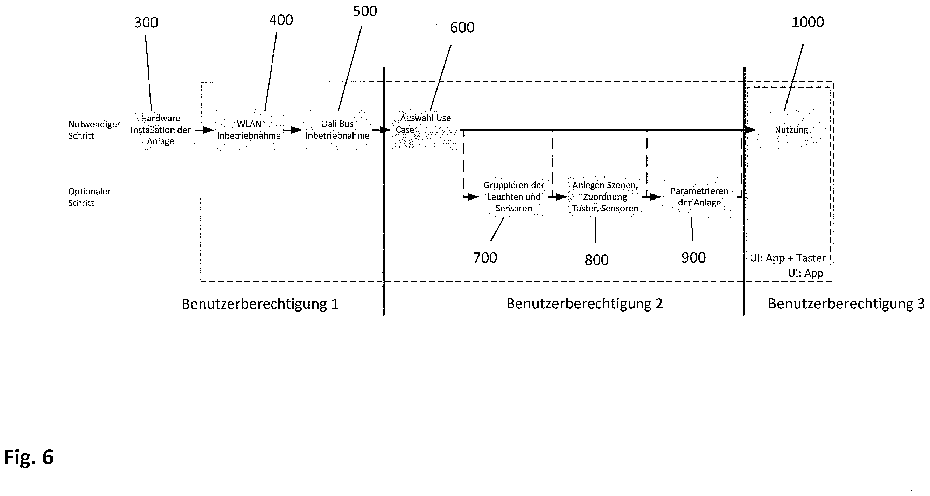

Figur 6 zeigt ein Ablaufdiagramm für den Aufbau und die erfindungsgemäße Konfigurierung bzw. Administration bis zum Betrieb einer Steuerungsanlage für ein Beleuchtungssystem, wie es in den Figuren 4 bzw. 5 angegeben ist. Nach der Hardware-Installation 300 des gesamten Beleuchtungssystems folgt zunächst der Schritt 400 mit der Einrichtung und der Inbetriebnahme des WLANs. Der nachfolgende Schritt 500 umfasst die Inbetriebnahme der jeweiligen DALI-Busse an den Steuerungsadaptern einschließlich der angeschlossenen DALI-Geräte. Dabei kann in einer Ausführungsform zunächst festgelegt werden, ob Leuchten des Beleuchtungssystems im Broadcast oder im Adressiermodus betrieben werden.

Danach erfolgt im Schritt 600 eine rechnergestützte Erfassung aller angeschlossenen DALI-Geräte und ein Vergleich des erfassten, d.h. ermittelten Beleuchtungssystemaufbaus mit abgespeicherten Beleuchtungssystemvorlagen und eine rechnerunterstützte Auswahl einer dieser Vorlagen für die weitere Konfigurierung bzw. Parametrierung des Beleuchtungssystems. Soweit nur eine einzelne Beleuchtungssystemvorlage vorliegt muss keine Auswahl erfolgen, stattdessen entspricht in diesem Fall die eine Vorlage der nachfolgend als ausgewählt be-zeichneten Beleuchtungssystemvorlage.

Ausgehend von der ausgewählten Beleuchtungssystemvorlage kann dann in nachfolgenden Schritten die Konfigurierung bzw. Parametrierung des Beleuchtungssystems vervollständigt werden, insbesondere durch Nutzereingaben. Dabei kann jedoch auch vorgesehen sein, dass alle Daten zum Konfigurieren bzw. Parametrieren des Systems von der ausgewählten Beleuchtungssystemvorlage übernommen werden. Zum Schritt 700 kann hierzu eine Gruppierung von Leuchten und Sensoren des Beleuchtungssystems erfolgen, wie sie in der ausgewählten Beleuchtungssystemvorlage vorgegeben ist. Beispielsweise kann darüber festgelegt werden, welcher Licht- und/oder Präsenzsensor eine bestimmte Leuchte oder Leuchtengruppe steuert. Insofern können auch Leuchten gruppiert werden, welche nach der Gruppierung zusammen und einheitlich angesteuert werden. Im Schritt 800 kann eine Zuordnung von Taster und Sensoren sowie das Anlegen von Lichtszenen, d.h. zeitlichen Abläufen, oder von Lichtsituationen in welchen bestimmte Lichtwerte vorgegeben sein können, erfolgen. Dabei kann beispielsweise festgelegt werden, welche Funktionen ein Wandtaster hat und wie dieser mit einem Präsenzmelder zusammenspielt. Im letzten Schritt 900 erfolgt die Parametrierung der Steuerungsanlage beispielsweise durch Eingabe von vorgegebenen Dimmwerten, Schwellwerten etc. Danach ist die Steuerungsanlage vollständig konfiguriert und parametriert und kann im Schritt 1000 betrieben werden, wobei die Anlage durch Sensorsignale und Nutzereingaben am Taster bzw. Schalter betrieben wird. Darüber hinaus kann auch vorgesehen sein, dass Nutzereingaben über ein WLAN-Endgerät wie ein Smartphone erfolgen.

In der beschriebenen Ausführungsform sind die Schritte 300, 400 und 600 - 900 sowie der Schritt 1000 unterschiedlichen Nutzer-Berechtigungen zugeordnet, welche über jeweilige Passwörter abgesichert sein können.

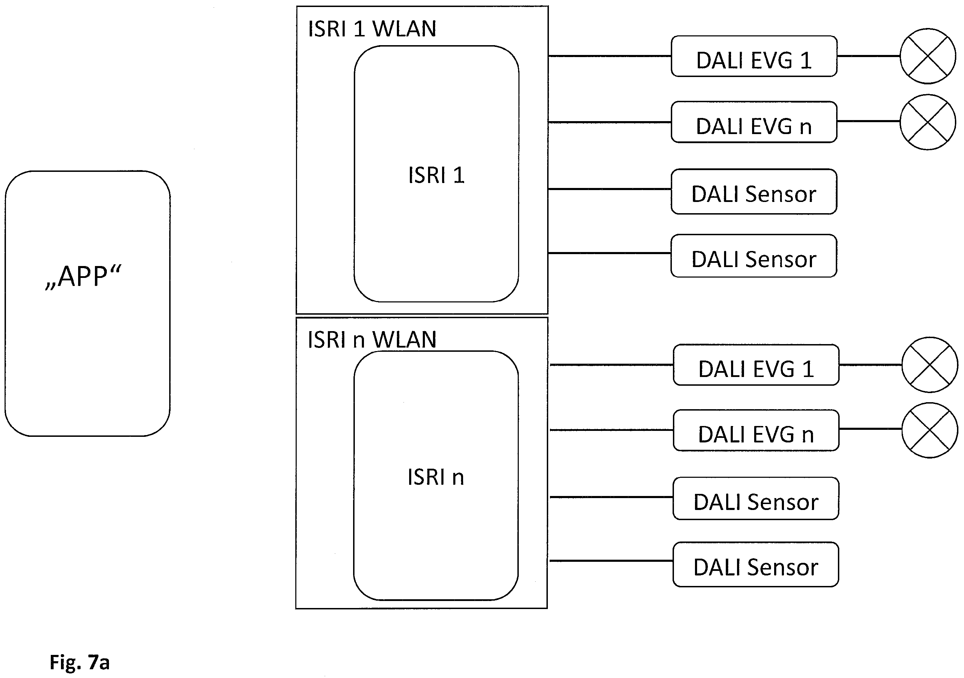

Bevor auf einzelne Konfigurationsschritte der Figur 6 eingegangen wird, soll mit Bezug auf die Figuren 7a - c die prinzipielle Funktionsweise der erfindungsgemäßen Steuerungsanlage aus Softwaresicht beschrieben werden. Die Steuerungsadapter sind dabei mit dem Bezugszeichnen ISRIi, i= 1..n versehen. Betrachtet wird der Zeitpunkt direkt nach dem Schritt 300 der Figur 6, d.h. nach der Hardwareinstallation der Steuerungsanlage bzw. des Beleuchtungssystems. Der Einfachheit halber sind die zugeordneten Softwarefunktionalitäten mit den jeweiligen Geräten bezeichnet, wobei die Angabe "App" die Software auf dem Funknetz-Endgerät, in der vorliegenden Ausführungsform ein Smartphone angibt, von welchem die gesamte Administration der Steuerungsanlage bzw. des Beleuchtungssystems durchgeführt werden kann.

In Bezug auf die in jedem Steuerungsadapter bereitgestellte Funktionalität zur Steuerung der an angeschlossenen DALI-Betriebskomponenten kann diese aus kleinen Funktionsblöcke zusammengesetzt werden, die untereinander frei kombinierbar sind, sodass über die Smartphone-Applikation durch eine solche Software-Modulverschaltung im Steuerungsadapter beliebige Funktionalitäten realisiert werden können. Dieser modulare Ansatz ermöglicht die verschiedensten Anwendungen, ohne dass für den Steuerungsadapter neue Software entwickelt werden muss. Die Smartphone-App kann diese Flexibilität dem Nutzer auf dem Display offen zeigen, jedoch ist es auch möglich, dem Nutzer Beleuchtungssystemvorlagen vorzuschlagen, womit dem Benutzer viele Detaileinstellungen erspart und dennoch beliebige Anwendungsfälle vollständig eingerichtet werden können.

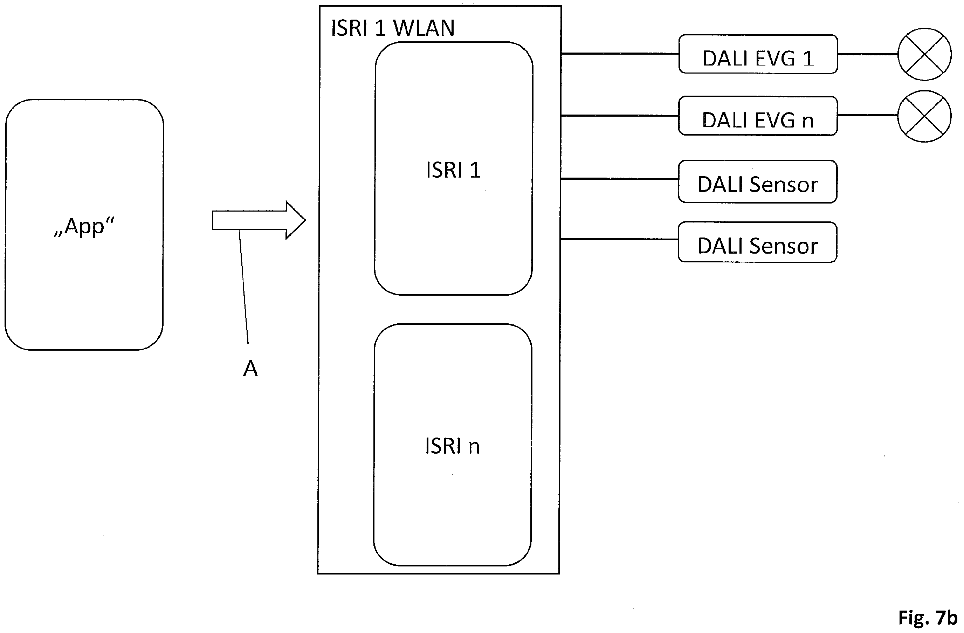

Figur 7a zeigt die Situation nach dem Schritt 300, siehe Figur 6. Alle Steuerungsadapter sind standardmäßig zunächst als WLAN-Access-Point, d.h. als Basisstation konfiguriert, sodass sie vom Smartphone-App entsprechend gescannt und angezeigt werden können. Figur 7b zeigt den Schritt des Bildens eines gemeinsamen WLAN-Netzes durch die Smartphone-App, wobei eine hohe Flexibilität zur Gestaltung des Netzes bereitgestellt wird, worauf untenstehende näher eingegangen wird. Insbesondere können die Steuerungsadapter über ihre jeweiligen WLAN-Module in ein bestehendes WLAN-Netz durch die App, u.U. unter Einbindung von Nutzereingaben, integriert werden. Es ist jedoch auch möglich, dass ein einzelner Steuerungsadapter als Basisstation (Access Point) konfiguriert ist, an welchem weitere acht Steuerungsadapter nach dem einschlägigen WLAN-Standard als Clients datentechnisch angeschlossen werden können. Die eingerichtete WLAN-Konfiguration wird dann in den Steuerungsadaptern mit dem eigenen Namen gespeichert für die nachfolgende Kommunikation über das Netzwerk, insbesondere für eine Suche nach Geräten im Netz (Service Discovery).

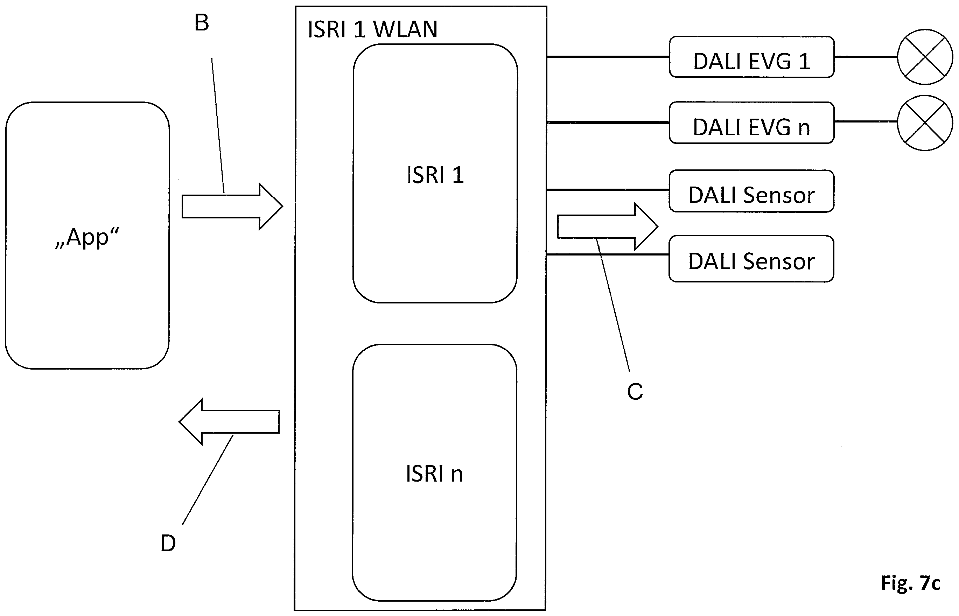

Figur 7c zeigt den Vorgang der Anforderung (B) eines Scans nach DALI-Geräten durch die Smartphone-App an alle Steuerungsadapter, welche jeweils den Scan (C) an ihrem zugeordneten DALI-Bus durchführen und die angeschlossenen DALI-Geräte erkennen (erfassen) und an das Smartphone übermitteln (D). Die Steuerungsadapter vergeben jeweils für die an ihrem Bus angeschlossenen DALI-Geräte Adressen, konfigurieren diese gegebenenfalls und speichern die Liste der Geräte. Die mit Bezug auf die Figuren 7a - c beschriebenen Vorgänge betreffen die Schritte 400 und 500 der Figur 6.

Nach dem Einrichten des Funknetzwerkes und dem Erfassen der an allen DALI-Bussen der Steuerungsadapter angeschlossenen Geräte wird der so ermittelte Beleuchtungssystemaufbau bezüglich der umfassten Steuerungsadapter und der diesen über den jeweiligen DALI-Bus zugeordneten Geräten mit abgespeicherten Beleuchtungssystemvorlagen nach vorbestimmten Kriterien verglichen. Solche Kriterien können beispielsweise die Anzahl und die Typen der DALI-Geräte wie Sensortypen, Leuchtentypen, Vorschaltgerätetypen und/oder die Anzahl und die Art der WLAN-Kopplung der umfassten Steuerungsadapter sein. Solche Kriterien können ferner die an einen Steuerungsadapter angeschlossenen Typen von DALI-Geräten wie Schalter/Taster, Sensortypen, Leuchtentypen, Vorschaltgerätetypen und/oder deren jeweilige Anzahl umfassen.

Die Beleuchtungssystemvorlagen können je nach Ausführung beispielsweise direkt in der Smartphone-App bzw. in einem anderen Speicherbereich im Smartphone abgelegt sein. Es ist jedoch auch möglich, dass ein solcher Abgleich mit einer Datenbank durchgeführt wird, auf die das Smartphone über einen Webbrowser zugreifen kann. Wird eine Beleuchtungssystemvorlage gefunden, welche einen vorgegebenen Grad von Übereinstimmung mit dem ermittelten Beleuchtungssystemaufbau besitzt, kann prozessorgestützt und vollautomatisch diese Beleuchtungssystemvorlage von der App des Smartphones zur weiteren Konfiguration und Parametrierung des Beleuchtungssystems zugrunde gelegt werden. Darüber hinaus ist es auch möglich, dass dem Nutzer auf dem Smartphone eine Listung mit mehreren passenden Beleuchtungssystemvorlagen angezeigt wird, aus welcher er eine für die weitere Konfigurierung der Anlage des Systems auswählen kann.

Wie obenstehend erläutert, kann beispielsweise nur eine einzelne Beleuchtungssystemvorlage vorbestimmt und abgespeichert sein, sodass dann keine Auswahl nach solchen Kriterien erfolgen muss.

Nach der Festlegung der Beleuchtungssystemvorlage kann je nach spezifischer Anwendung durch die Smartphone-App dann in den Steuerungsadaptern automatisch die entsprechend der Vorlage vorgegebene Gruppierung von Leuchten und Sensoren, Zuordnung von Taster und Sensoren bzw. Parametrierung durchgeführt werden, wobei, von der Smartphone-App gesteuert, die entsprechenden Softwaremodule in den Steuerungsadaptern zusammengeschaltet werden. In einer anderen Ausführungsform können diese Konfigurationsschritte zumindest teilweise über die Smartphone-App vom Nutzer manuell eingestellt werden, worauf dann von der Smartphone-App gesteuert die entsprechenden Softwaremodule in den Steuerungsadaptern zusammengeschaltet werden.

Mit Bezug auf Figur 6 wird im Folgenden der Schritt 400, d.h. das Einrichten und die Inbetriebnahme des WLAN-Netzes der Steuerungsanlage näher erläutert, wobei eine raumweise Konfiguration der Anlage zweckmäßig ist. Dabei sei darauf hingewiesen, dass die Steuerungsanlage bzw. das zugeordnete Beleuchtungssystem über die in den Figuren 4 und 5 angegebenen Beispiele eines einzelnen Großraumbüros bzw. einer Einkaufsetage hinausgehen kann, beispielsweise mehrere derartiger Räume mit spezifischen Beleuchtungsteilsystemen umfassen kann. Auch bei derartigen komplexen Steuerungsanlagen bzw. Beleuchtungssystemen kann zweckmäßigerweise die Administrierung raumweise erfolgen, wobei dann festzulegen ist, ob alle Steuerungsadapter in ein einzelnes LAN-Netz integriert werden oder ob diese unabhängig zueinander konfiguriert werden, wobei eine Kommunikation durch das Bereitstellen entsprechender Router ermöglicht wird.

Der Schritt 400, siehe Figur 6, umfasst zunächst den Schritt des Abtastens des WLAN-Funknetzfrequenzbereichs zur Ermittlung von WLAN-Teilnehmern, welche als Basisstation (Access Point) oder als Drahtlos-Router konfiguriert sind und darüber hinaus als Steuerungsadapter datentechnisch erkennbar sind. Wie oben stehend beschrieben, erfolgt diese Abtastung über das Smartphone, respektive die darauf ablaufende App, wobei die WLAN-Module aller Steuerungsadapter in ihrer Standardkonfiguration alle als WLAN-Basisstation (Access Point) bzw. als WLAN-Hotspot konfiguriert sind und darüber hinaus eine eindeutige, d.h. geräteabhängige Seriennummer aufweisen, welche beispielsweise im WLAN als SSID (Service Set Identification) bei dem WLAN-Scan durch das Smartphone erkennbar und anzeigbar ist. Ferner werden dem Nutzer alle weiteren als Basisstation bzw. Drahtlos-Router oder WLAN-Hotspot arbeitende Stationen auf dem Smartphone angezeigt, sodass diese zur Einrichtung eines WLAN-Netzes bzw. eines Teilnetzes vom Nutzer zur Verfügung stehen und ausgewählt und konfiguriert werden können.

Die Auswahl der Steuerungsadapter wird zweckmäßigerweise raumweise durchgeführt. Hierzu bietet die Smartphone-App dem Benutzer die Möglichkeit, ermittelte Steuerungsadapter anzuklicken, worauf die an diesem Steuerungsadapter angeschlossenen Leuchten bzw. Leuchtmittel über den jeweiligen DALI-Bus eingeschaltet werden bzw. eine andere Lichtsignalisierung abgeben, sodass der Benutzer erkennt, ob sich der Teil der Anlage bzw. der Teil des Beleuchtungssystems im aktuellen Raum befindet. Soweit dies der Fall ist, wird der Steuerungsadapter vom Benutzer über die App ausgewählt und als WLAN-Teilnehmer eines bestimmten WLAN-Netzes oder Sub-Netzes konfiguriert. Auf diese Weise kann eine Untermenge der über das Abtasten ermittelten Funknetzteilnehmer ausgewählt und als ein zu einem bestimmten WLAN-Netz zugehöriger WLAN-Teilnehmer konfiguriert. Soweit die Steuerungsanlage ein Beleuchtungssystem in mehreren Räumen umfasst, kann der beschriebene Vorgang in jedem Raum entsprechend wiederholt werden, um die gesamte Anlage zu konfigurieren werden.

In einer anderen WLAN-Konfiguration können auch alle, über das beschriebene Abtasten ermittelten Funknetzteilnehmer ausgewählt und als ein zu einem bestimmten WLAN-Netz zugehöriger WLAN-Teilnehmer konfiguriert werden.

Um das Eindringen Unberechtigter in das WLAN-Netz der Steuerungsanlage zu verhindern, kann in allen Steuerungsadaptern ein jeweiliges, selbstsigniertes Zertifikat umfassend ein asymmetrisches Schlüsselpaar abgelegt sein, wobei der Benutzer nach der Markierung des jeweiligen Steuerungsadapters durch die App ausgefordert wird, den öffentlichen Schlüssel einzugeben. Dieser kann je nach Ausführungsform über die Tastatur des Smartphones oder über das Einscannen eines QR-Codes, welcher beispielsweise am Gehäuse des jeweiligen Steuerungsadapters angebracht sein kann, durchgeführt werden. Erst nach der Überprüfung des eingegebenen öffentlichen Schlüssels im Steuerungsadapter kann der jeweilige Steuerungsadapter ausgewählt und in das aktuelle WLAN-Netz integriert werden. In einer anderen Ausführungsform kann auch vorgesehen sein, dass der jeweilige öffentliche Schlüssel der zur Verfügung stehenden Steuerungsadapter direkt in der Smartphone-App abgelegt ist oder von dieser über eine gesicherte Verbindung aus dem Internet herunterladbar ist und damit eine Verifizierung der Authentizität des Steuerungsadapters ohne weitere Eingabe des Benutzers erfolgen kann.

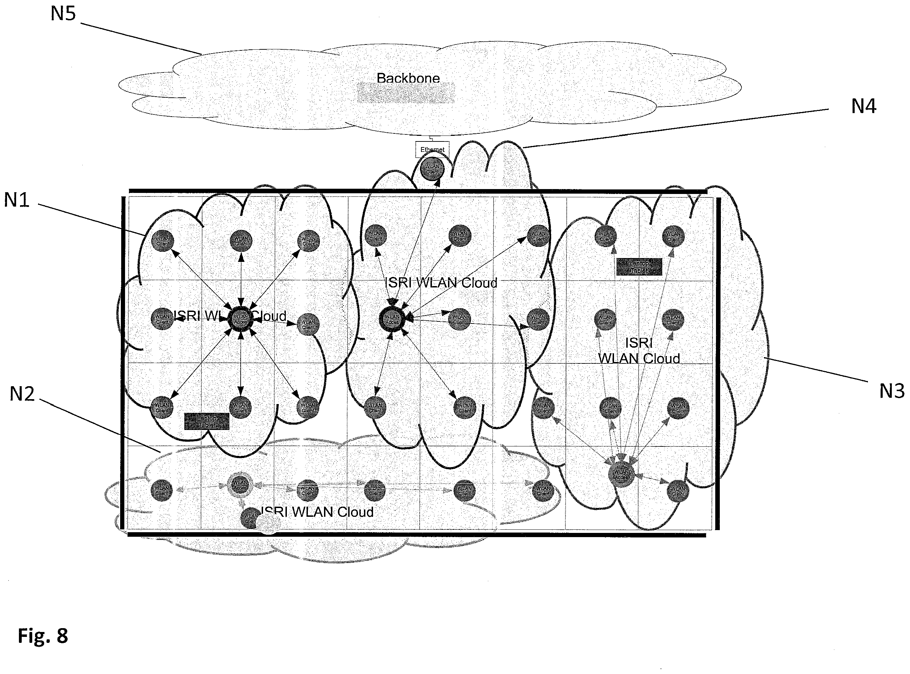

Der Schritt 400 des Konfigurierens des WLANs und dessen Inbetriebnahme kann zu verschiedenen WLAN-Infrastrukturszenerien führen. Beispielsweise kann die Konfiguration derart durchgeführt werden, dass in einem Raum ein Steuerungsadapter als WLAN-Basisstation (Access Point) agiert, während beispielsweise weitere acht als WLAN-Clients konfigurierte Steuerungsadapter daran angeschlossen sind, wobei die Konfiguration und Inbetriebnahme dieses Beleuchtungssystemabschnitts wie oben beschrieben durchgeführt werden kann. Mit einer derartigen Ausbildung kann dieses Teilsystem der Steuerungsanlage bzw. des Belichtungssystems beispielsweise maximal 9 x 64 DALI-Geräte umfassen. Figur 8 zeigt eine derartige WLAN-Infrastruktur, bei welcher das gesamte System sich durch vier derartige Teil- oder Subnetze N1-N4 zusammensetzt, wobei diese Teilnetze nicht miteinander verbunden sind, und nur ein einzelnes über einen Router an ein Firmen-LAN N5 angeschlossen ist. Insbesondere kann das in Figur 4 gezeigte System durch ein entsprechendes, in Figur 8 als WLAN-Cloud bezeichnetes WLAN-Netz bereitgestellt werden. In solchen Fällen, in welchen das Gesamtsystem mehrere derartige Großraumbüros umfasst, kann jedes einzelne Großraumbüro über ein wie beschriebenes Teilnetz entsprechend der Figur 8 abgebildet werden. In einer nicht dargestellten Ausführungsform kann auch vorgesehen sein, dass eine WLAN-Kopplung zwischen den einzelnen Teilnetzen vorgesehen ist, insbesondere mittels WLAN-Basis-stationen und WLAN-Repeater.

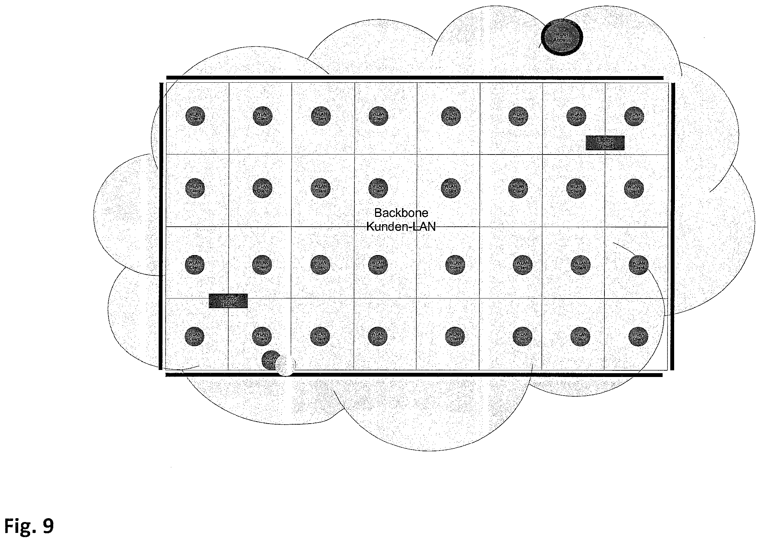

Figur 9 zeigt eine andere Ausführungsform einer konfigurierten WLAN-Infrastruktur, bei welcher die Steuerungsadapter respektive deren WLAN-Module alle als WLAN-Clients in einem Firmen-WLAN-Netzwerk konfiguriert sind. Zu diesem Zweck müssen allen Steuerungsadaptern die im Kundennetz relevanten WLAN-Zugangsdaten zur Verfügung gestellt werden.

Neben den beschriebenen WLAN-Infrastrukturen sind auch noch weitere Strukturen, beispielsweise auch Mischstrukturen unter Einbindung mehrerer Funkstandards wie 6LoWPAN/ZigBee und/oder WLAN und/oder EnOcean möglich. Reine WLAN-Lösungen sind jedoch zu bevorzugen, insbesondere bei größeren Installationen aufgrund der damit verbundenen Vermeidung von notwendigen Gerätevarianten und Verringerung der Planungs- und Installationskomplexität. Mit den beschriebenen WLAN-Strukturen können jedwede Installationssituationen abgebildet werden, insbesondere Steueranlagen bzw. Beleuchtungssysteme für Hallen wie Logistikhallen oder Baumärkte mit Flächen von einigen Tausend Quadratmetern, Großraumbüros, Einraum-Installationen, Schulklassen etc., wobei sich das jeweilige Gesamtsystem auch über mehrere Etagen eines Gebäudes erstrecken kann. Wie erläutert kann eine Anpassung an komplexere Raumgeometrien durch den Einsatz von Repeatern bereitgestellt werden. In einer weiteren nicht dargestellten Ausführungsform kann auch eine WLAN-Kopplung der Steuerungsadapter mit einer sogenannten Vermaschung (Meshing) durchgeführt werden.

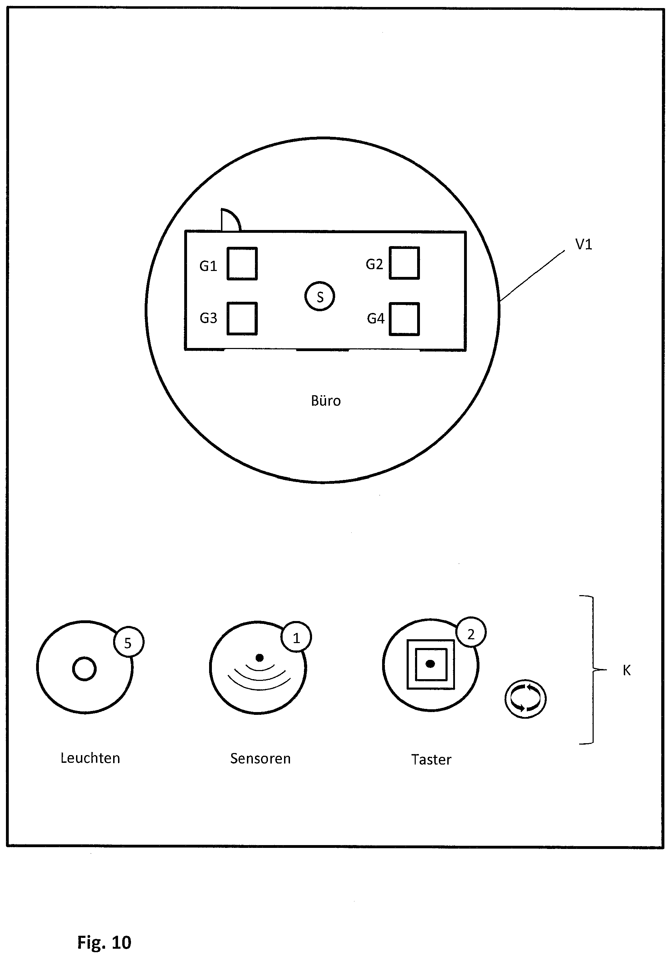

Im Folgenden soll mit Bezug auf die nachfolgenden Figuren 10 bis 14 das erfindungsgemäße Verfahren nach Durchführung der Schritte 300 bis 600 gemäß Figur 6 für den Fall einer Ausführungsform der Erfindung näher erläutert werden, bei welcher eine einzelne Beleuchtungssystemvorlage vorbestimmt ist, nach der bzw. auf der Grundlage dessen die weitere Konfiguration bzw. Zuordnung der Komponenten und/oder Parametrierung des Beleuchtungssystems erfolgt. Zur Vereinfachung der Darstellung wird dabei davon ausgegangen, dass die erfindungsgemäße Steuerungsanlage einen einzelnen Steuerungsadapter umfasst, an dem wie beschrieben eine Mehrzahl von lichttechnischen Betriebskomponenten wie Betriebsgeräte, Vorschaltgeräte, Sensoreinrichtungen und/oder Schaltereinrichtungen angeschlossen sind. In dieser Ausführungsform ist der digitale Steuerbus wiederum als DALI-Bus ausgebildet, sodass eine maximale Anzahl von 64 Betriebskomponenten anschließbar ist, was in einer Vielzahl von Anwendungen, beispielsweise für die Gestaltung eines Beleuchtungssystems in kleinen oder mittelgroßen Räumen wie Klassenzimmern, Büroräumen, Bürozimmer etc. ausreichend ist. Dabei wird im Folgenden davon ausgegangen, dass die Konfiguration des Beleuchtungssystems wie beschrieben auf einem Funknetz/Endgerät erfolgt, wobei dieses vorliegend als Tablet ausgebildet ist.

Gemäß Schritt 300 der Figur 6 wurden alle lichttechnischen Betriebskomponenten, die mittels des digitalen Steuerbusses an dem einzelnen Steuerungsadapter angeschlossen sind, durch einen DALI-Scan des Steuerungsadapters erfasst und identifiziert, an das Tablet bzw. die dort ablaufende App übertragen und von dieser auf dem Bildschirm des Tablets zusammen mit der Beleuchtungssystemvorlage V1 visualisiert, siehe Figur 10. Erkennbar weist die Beleuchtungssystemvorlage V1 vier Leuchtengruppen G1 bis G4 sowie einen Sensor S auf. Als erfasste lichttechnische Betriebskomponenten werden in der Zeile K des Bildschirms fünf Leuchten, ein Sensor S sowie zwei Tastereinrichtungen T angezeigt.

Nach der Erfassung können die lichttechnischen Betriebsgeräte vom Steuerungsadapter angesteuert werden, insbesondere zur optischen Signalisierung, sodass der Nutzer erkennen kann, wo im Raum sich die jeweilige Komponente befindet. Mit dem rechts neben dem Taster angezeigten Icon kann der Benutzer diesen Scanvorgang am DALI-Bus des Steuerungsadapters anstoßen.

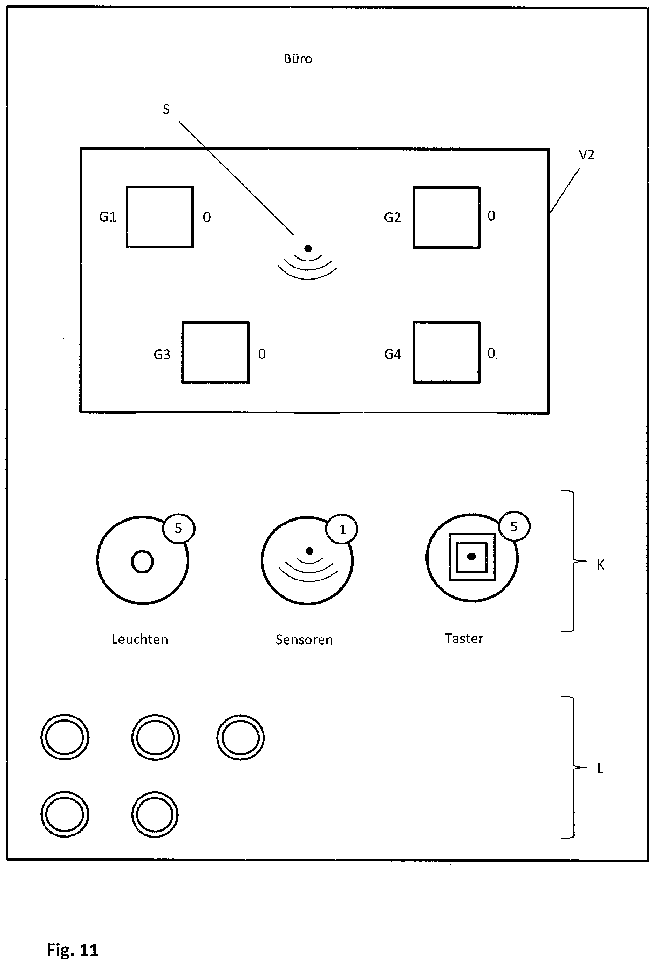

Durch Anwahl der Beleuchtungssystemvorlage V1 gemäß Figur 10 gelangt der Benutzer in das in Figur 11 dargestellte Menü bzw. zur dort dargestellten Visualisierung, auf der Grundlage dessen eine Zuordnung von Leuchten, Sensoren und Tastern des vorliegenden Beleuchtungssystems zu den diesbezüglichen Betriebskomponenten der Beleuchtungssystemvorlage V1 zugeordnet werden. Erkennbar wird in der in Figur 11 dargestellten Visualisierung V2 der Beleuchtungssystemvorlage neben den vier Leuchtengruppierungen G1 bis G4 jeweils auch die Anzahl der schon zugeordneten Leuchten des realen Beleuchtungssystems angezeigt, die wiederum in der Zeile K visualisiert sind. Darüber hinaus sind in der Darstellung gemäß Figur 11 im unteren Abschnitt L, welcher die visualisierten Leuchten einzeln darstellt, jeweils fünf Icons bzw. Symbole angegeben, durch deren Anwahl die jeweilige Leuchte zur Signalisierung angesteuert werden kann. Diese Visualisierung der einzelnen Leuchte im Abschnitt L kann in der beschriebenen Ausführungsform durch Auswahl des Icons "Leuchten" in der Visualisierungszeile K gesteuert werden.

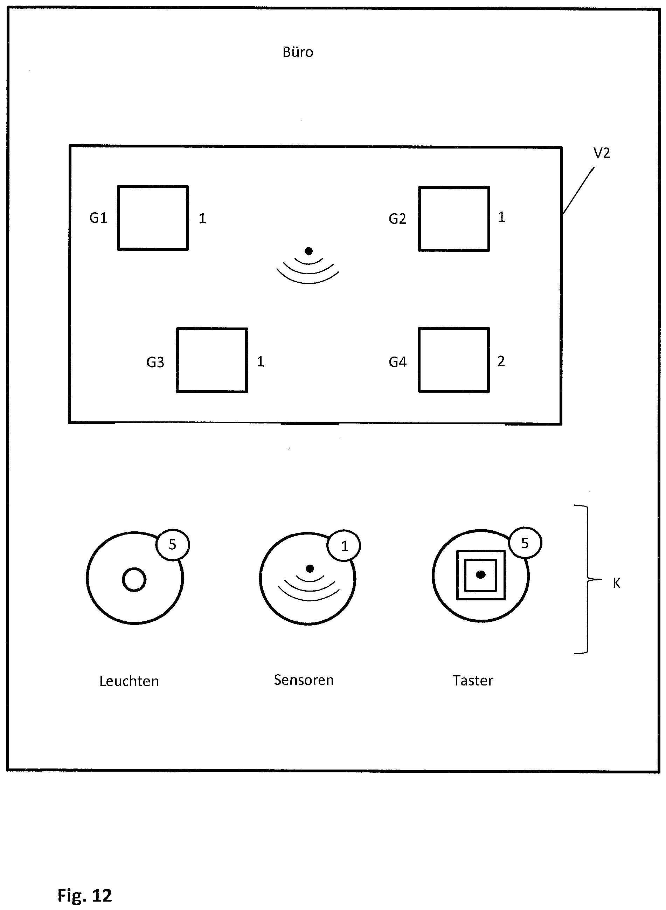

Der Anwender kann nun am Bildschirm jede einzelne der im Bereich L angegebenen Leuchtensymbole auswählen und die jeweilige reale Leuchte aufgrund der so verursachten Signalisierung einer der vier Leuchtengruppierungen G1 bis G4 dadurch zuordnen, dass das jeweilige Leuchtenicon in eine vom Nutzer ausgewählte Lampengruppierung G1 bis G4 durch einen herkömmlichen Drag-and-Drop-Vorgang gezogen wird. Die aktuell gruppierten Leuchten in der jeweiligen Gruppe werden in der Visualisierung gemäß Figur 11 durch eine entsprechende Ziffer an den Gruppierungsicons G1 bis G4 angezeigt. Sensoren und Taster können in ähnlicher Art und Weise zugeordnet werden, sodass sich am Ende des Zuordnungsvorgangs der Betriebskomponenten des Beleuchtungssystems zu den Betriebskomponenten der Beleuchtungssystemvorlage das in Figur 12 angegebene Bild auf dem Display des Tablets ergibt. Eine Zuordnung von Lampen zu einer der vier angegebenen Gruppen G1 bis G4 kann dadurch rückgängig gemacht werden, dass das betreffende Gruppenicon angewählt wird, worauf in ähnlicher Weise wie in Figur 11 gezeigt, die der Gruppe zugeordneten Leuchten visualisiert werden. Durch Anwählen eines Leuchten-Icons wird die jeweilige Leuchte zur Signalisierung bestromt und kann dann vom Benutzer aus der Gruppe durch Löschen des Icons entfernt werden.

In einer nicht näher beschriebenen Ausführungsform kann auch vorgesehen sein, dass eine Beleuchtungssystemvorlage vom Benutzer überarbeitet werden kann, beispielsweise durch das Löschen oder Hinzufügen von lichttechnischen Betriebskomponenten, wie Leuchten, Sensoren und/oder Schalter. Gleiches gilt insbesondere auch für Gruppen von Leuchten.

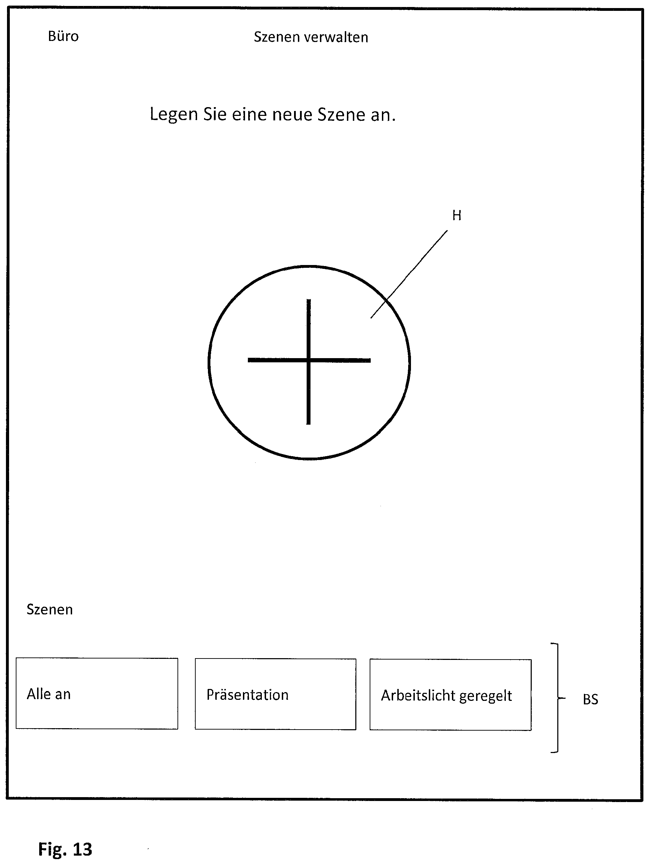

Nachdem die Zuordnung der am digitalen Bus des Steuerungsadapters angeschlossenen Betriebskomponenten abgeschlossen ist, können mit dem nachfolgenden Untermenü "Szenen verwalten" Beleuchtungsszenen bzw. Beleuchtungssituationen verwaltet, insbesondere konfiguriert bzw. parametrisiert, hinzugefügt und gelöscht werden, siehe Fig. 13. Derartige Beleuchtungssituationen bzw. Szenen betreffen beispielsweise die Festlegung von Dimmfaktoren für einzelnen Leuchten bzw. Leuchtengruppen und/oder die Festlegung einer Abschaltzeit eines Präsenzsensors nach einer Präsenzmeldung.

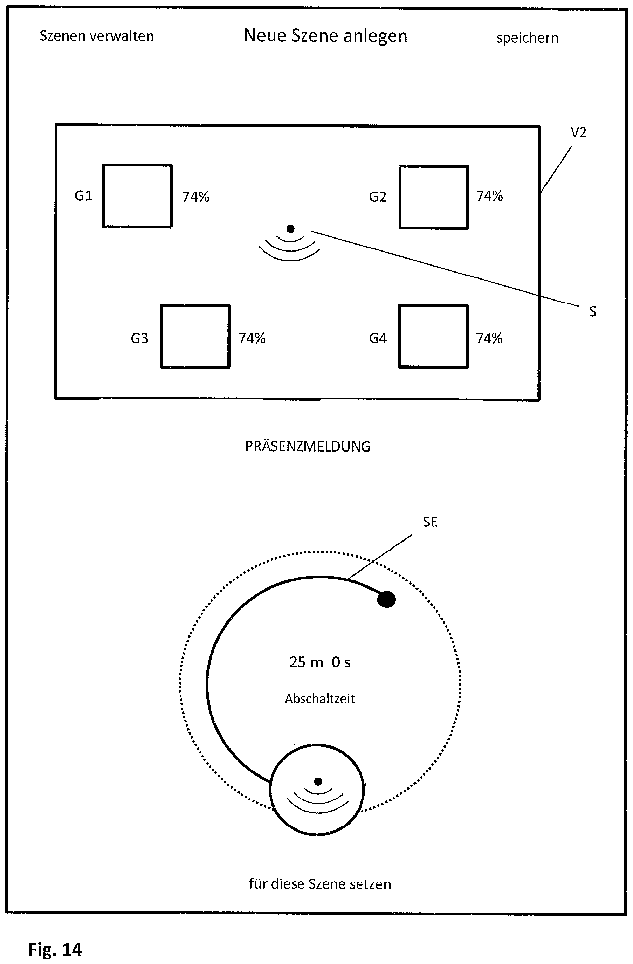

Fig. 14 zeigt die grafisch unterstützte Eingabe der Abschaltzeit des Präsenzsensors S für eine neu angelegte Beleuchtungsszene, in welcher alle Leuchtengruppen auf 74% gedimmt sind. Auch diese Dimmwerte sind durch einfaches Auswählen des jeweiligen Gruppen-Icons einstellbar gestaltet. In ähnlicher Weise kann eine Tasterzuordnung durchgeführt werden, insbesondere in Bezug auf die Auswahl einer der eingerichteten Beleuchtungsszenen bzw. -situationen.

In einer besonderen Ausführungsform kann vorgesehen sein, ein Offset-Regelverhalten eines Beleuchtungssystems in einer eingestellten und auswählbaren Beleuchtungsszene vorzusehen, wobei grundsätzlich zumindest eine Leuchtengruppe bzw. eine Leuchte in Abhängigkeit des Sensorsignals eines Lichtsensors von der Steuerungsanlage automatisch gedimmt wird. Da ein vorgegebener Solllichtstrom in der Regel nicht an dem Ort gemessen werden kann, an welchem dieser Lichtstrom bereitgestellt werden soll, kann zweckmäßigerweise bei der Konfigurierung bzw. Parametrisierung der Steuerungsanlage eine Kalibrierung des Lichtsensors mit einem Handsensor am Ort des Solllichtstroms, beispielsweise einer Arbeitsfläche, durchgeführt werden. Hierbei werden die Leuchten bzw. Leuchtengruppen in Bezug auf ihr Dimmpegel so weit verändert, dass der Handsensor auf der beispielhaften Arbeitsfläche den gewünschten Lichtstrom anzeigt. Der sich dann am Lichtsensor des Beleuchtungssystems einstellende Sensorwert kann bei der nachfolgenden Steuerung des Dimmpegels als Sollwert herangezogen werden, um beispielsweise eine Konstanz des Lichtstroms auf der Arbeitsfläche im Wesentlichen unabhängig von äußeren Bedingungen wie Tageslichtzuständen bereitzustellen.

Soweit das Beleuchtungssystem zumindest zwei Leuchtengruppen aufweist, werden in der beschriebenen Ausführungsform beide Leuchtengruppen in Abhängigkeit des Sensorsignals des Lichtsensors von der Steuerungsanlage automatisch gedimmt. Die Kalibrierung des Sensors erfolgt wie gerade beschrieben, wobei sich für beide Leuchtengruppen jeweils ein Dimmpegel ergibt bzw. vom Anwender eingestellt wird und diese Dimmpegel unterschiedlich sein können. Der sich dann wiederum am Lichtsensor des Beleuchtungssystems einstellende Sensorwert kann bei der nachfolgenden Steuerung der Dimmpegel der beiden Leuchtengruppen als Sollwert herangezogen werden, um beispielsweise eine Konstanz des Lichtstroms auf der Arbeitsfläche im Wesentlichen unabhängig von äußeren Bedingungen wie Tageslichtzuständen bereitzustellen. Dabei kann die Regelung der Dimmpegel so erfolgen, dass der bei der Kalibrierung des Lichtsensors eingestellter Unterschied in den Dimmpegeln bei der Regelung in einem vorgegebenen Bereich der Dimmpegel beibehalten wird. Wurde beispielsweise bei nicht vorhandenem Umgebungslicht ein Dimmpegel von 80 % für die erste Leuchtengruppe und 70 % für die zweite Leuchtengruppe ermittelt, so bleibt dieser Unterscheid von 10 % fest, wenn aufgrund des Auftretens von Umgebungslicht beide Dimmpegel durch die Steuerung erniedrigt werden. Dabei kann auch vorgesehen sein, diesen Unterscheid in den Dimmpegeln der beiden Leuchtengruppen solange konstant zu halten, bis der Dimmpegel einer Leuchtengruppe einen vorgegebenen Minimalwert aufweist, danach wird beim weiteren Herunterdimmen durch die Steuerung aufgrund erhöhtem Umgebungslicht allein der Dimmpegel der zweiten Leuchtengruppe bis auf den Minimalwert erniedrigt. Auch hier kann die Einstellung bzw. Konfiguration vom Anwender wie beschrieben am Bildschirm des Endgerätes erfolgen.

Nach der Konfigurierung der Steuerungsanlage des Beleuchtungssystems können nachfolgend über die App des Tablets die jeweiligen Softwaremodule zur Steuerung der an dem Steuerungsadapter angeschlossenen lichttechnischen Betriebskomponenten zur Gestaltung einer spezifischen Betriebssoftware für den Steuerungsadapter zusammengeschaltet werden, wobei für jede lichttechnische Betriebskomponente bzw. für eine oder mehrere Funktionen einer solchen Betriebskomponente ein derartiges Softwaremodul vorgesehen sein kann.

### Bezugszeichenliste

- 1: Steuerungsanlage
- 10: Taster
- 20-23: Leuchte
- 24: Lichtsensor
- 25: Schalter
- 26: Präsenzsensor

- 30: Tisch
- 100: Steuerungsadapter
- 110: WLAN-Modul
- 120: DALI-Modul
- 130: Controller
- 140: Tastereingang
- 150: Systemtakteinheit
- 160: Erweiterungsmodul
- 200: Smartphone
- 300: Installation des Beleuchtungssystems
- 400: Einrichtung und Inbetriebnahme WLAN
- 500: Einrichtung und Inbetriebnahme DALI-Bus
- 600: Auswahl Beleuchtungssystemvorlage für weitere Konfigurierung
- 700: Kopieren von Leuchten/Sensoren
- 800: Zuordnung von Tastern/Sensoren
- 900: Parametrierung
- 1000: Betrieb
- B, S: Beleuchtungsszene
- Gi, i= 1..n,: Icon Gruppe von Leuchten
- H: Hinzufügen
- L: Icon Leuchten
- Li, i= 1..5: Icon Leuchte
- K: Icon Betriebskomponenten
- S: Icon Sensor
- SE: Icon Senoreinstellung
- T: Icon Taster
- V1, V2: Visualisierte Beleuchtungsvorlage

## Patentansprüche

1. System aufweisend Steuerungsanlage (1) und Funknetz-Endgerät für ein Beleuchtungssystem wobei die Steuerungsanlage (1) einen Steuerungsadapter (100) umfasst mit einer digitalen Schnittstelle und einem darüber an den Steuerungsadapter angeschlossenen und diesem zugeordneten digitalen Steuerbus, an dem eine Mehrzahl von lichttechnischen Betriebskomponenten wie Betriebsgeräte, Vorschaltgeräte, Sensoreinrichtungen (24) und/oder Schaltereinrichtungen (25) mittels einer jeweiligen digitalen Schnittstelle als Busteilnehmer anschließbar sind, wobei der Steuerungsadapter (100) ferner einen Controller (130) sowie eine Funkschnittstelle zur Datenkopplung des Steuerungsadapters an das Funknetz-Endgerät aufweist, **dadurch gekennzeichnet, dass** für eine Mehrzahl von Beleuchtungssystemvorlagen die jeweils umfassten lichttechnischen Betriebskomponenten und zumindest einige der den lichttechnischen Betriebskomponenten zugeordneten Konfigurationen und/oder Parametrierungen in einem Speicher des Funknetz-Endgerätes abgelegt sind, welcher vom Funknetz-Endgerät auslesbar ist, wobei zur Konfiguration und Inbetriebnahme des der Steuerungsanlage zugeordneten Beleuchtungssystems der zumindest eine Steuerungsadapter (100) ausgebildet ist alle an den digitalen Steuerbus angeschlossenen lichttechnischen Betriebskomponenten zu erfassen und die erfassten lichttechnischen Betriebskomponenten an das Funknetz-Endgerät zu übermitteln und das Funknetz-Endgerät dazu ausgebildet ist
prozessorgestützt einen Vergleich der erfassten lichttechnischen Betriebskomponenten mit denen zu der Mehrzahl von Beleuchtungssystemvorlagen gespeicherten lichttechnischen Betriebskomponenten nach vorbestimmten Kriterien durchzuführen, wobei das Funknetz-Endgerät dazu ausgestaltet ist: entweder
eine Beleuchtungssystemvorlage aus der Mehrzahl von Beleuchtungssystemvorlagen mit einer vorgegebenen Konfigurierung und/oder Parametrierung von lichttechnischen Betriebskomponenten zu ermitteln, welche nach den vorbestimmten Kriterien die größten Übereinstimmungen mit einem ermittelten Aufbau des Beleuchtungssystems aufweist, und die ermittelte Beleuchtungssystemvorlage auszuwählen oder
mehrere Beleuchtungssystemvorlagen aus der Mehrzahl von Beleuchtungssystemvorlagen mit einer jeweiligen vorgegebenen Konfigurierung und/oder Parametrierung von Betriebskomponenten zu ermitteln, welche die größten Übereinstimmungen nach den vorbestimmten Kriterien aufweisen und Listen von Beleuchtungssystemvorlagen nach der Größe der Übereinstimmung in Bezug auf die vorbestimmten Kriterien und auf einem Display des Funknetz-Endgeräts zur Auswahl für eine Nutzer anzuzeigen sowie eine Nutzereingabe an dem Display zur Auswahl einer Beleuchtungssystemvorlagen zu erfassen,
wobei das Funknetz-Endgerät ferner ausgebildet ist, die ausgewählte Beleuchtungssystemvorlage einer nachfolgenden Konfiguration und/oder Parametrierung des Beleuchtungssystems durch das Funknetz-Endgerät zugrunde zu legen, wobei das Konfigurieren und/oder Parametrieren des Beleuchtungssystems nach der ausgewählten Beleuchtungssystemvorlage prozessorgestützt auf dem Funknetz-Endgerätdurchgeführt ist.

2. System nach Anspruch 1, **dadurch gekenn- zeichnet, dass** die Steuerungsanlage eine Mehrzahl von Steuerungsadapter (100) mit jeweils einer digitalen Schnittstelle zum Anschluss an dem zugeordneten digitalen Steuerbus, einen Controller (130) sowie eine Funkschnittstelle aufweist, wobei die jeweiligen Steuerungsadapter als Wireless-Client, Wireless-Basisstation (Wireless Access Point) und/oder als Wireless-Router konfigurierte Teilnehmer des Funknetzes, insbesondere eines WLAN-Netzes ausgebildet sind.

3. Verfahren zum Konfigurieren einer Steuerungsanlage eines Systems gemäß den Ansprüchen 1 oder 2, **gekennzeichnet durch** die Schritte:
- Einrichten eines Funknetzwerkes umfassend den Steuerungsadapter (100) als Funknetzteilnehmer basierend auf einer erfassten Benutzereingabe an dem Funknetz-Endgerät;
- Erfassen der an dem zugeordneten digitalen Steuerbus des Steuerungsadapters (100) angeschlossenen lichttechnischen Betriebskomponenten durch den Steuerungsadapter (100) ;
- Übermitteln der erfassten, an den Steuerungsadapter (100) angeschlossenen lichttechnischen Betriebskomponenten an das Funknetz-Endgerät;
- Vergleichen der erfassten lichttechnischen Betriebskomponenten mit den lichttechnischen Betriebskomponenten der Mehrzahl von abgespeicherten Beleuchtungssystemvorlagen nach den vorbestimmten Kriterien durch das Funknetz-Endgerät; beinhaltend entweder Ermitteln der Beleuchtungssystemvorlage aus der Mehrzahl von Beleuchtungssystemvorlagen mit einer vorgegebenen Konfigurierung und/oder Parametrierung von lichttechnischen Betriebskomponenten, welche nach den vorbestimmten Kriterien die größte Übereinstimmung mit dem Aufbau des Beleuchtungssystems aufweist und Auswählen der ermittelten Beleuchtungssystemvorlage durch das Funknetz-Endgerät,
oder
Ermitteln der mehreren Beleuchtungssystemvorlage aus der Mehrzahl von Beleuchtungssystemvorlagen mit einer jeweiligen vorgegebenen Konfigurierung und/oder Parametrierung von lichttechnischen Betriebskomponenten, welche die größten Übereinstimmungen nach den vorbestimmten Kriterien aufweisen und Listen von Beleuchtungssystemvorlagen nach der Größe der Übereinstimmung in Bezug auf die vorbestimmten Kriterien, durch das Funknetz-Endgerät,
Anzeigen der ermittelten Beleuchtungssystemvorlagen auf dem Display des Funknetz-Endgeräts zur Auswahl durch den Nutzer sowie Erfassung der Auswahl einer der angezeigten Beleuchtungssystemvorlagen mittels der Nutzereingabe auf dem Displaydurch das Funknetz-Endgerät
- Konfigurieren und/oder Parametrieren des Beleuchtungssystems nach der ausgewählten Beleuchtungssystemvorlage prozessorgestützt auf dem Funknetz-Endgerät.

4. Verfahren nach Anspruch 3, **dadurch gekennzeichnet, dass** das Einrichten eines Funknetzwerkes die Schritte umfasst:
- Abtasten eines vorgegebenen Funknetz-Frequenzbereiches durch das Funknetz-Endgerät zur Ermittlung von Funknetz-Teilnehmern, welche als Basisstation (Wireless Access Point) oder Drahtlos-Router konfiguriert und als Steuerungsadapter datentechnisch erkennbar sind, insbesondere durch Angabe einer, einem Steuerungsadapter (100) zugeordneten eindeutigen Kennung;
- Erfassen jeweils einer Benutzerauswahl durch das Funknetz-Endgerät zur Auswahl des jeweiligen durch Abtasten ermittelten Steuerungsadapter als zum Funknetzteil gehörigen Steuerungsadapter als zum Funknetzteil gehörigen Steuerungsadapter als einer Untermenge oder aller ermittelten Steuerungsadapter und Konfigurieren der Nutzer ausgewählten Steuerungsadapter als dem bestimmten Funknetz zugehöriger Funknetz-Teilnehmer.

5. Verfahren nach Anspruch 4, **dadurch gekennzeichnet, dass** der Schritt des Auswählens von Steuerungsadapter (100) umfasst für jeden durch Abtasten ermittelten Steuerungsadapter:
- Anzeigen des durch Abtasten ermittelten Steuerungsadapters (100) auf dem Display durch ein zugeordnetes Symbol;
- Markieren eines, dem Steuerungsadapter zugeordneten Symbols auf dem Display des Funknetz-Endgerätes durch den Nutzer und Erfassen der Markierung des dem Steuerungsadapter zugeordneten Symbols durch das Funknetz-Endgerät;
- Ansteuern des dem markierten Symbol zugeordneten Steuerungsadapters zur Abgabe eines optischen und/oder akustischen Signals;
- Im Ansprechen auf die Signalisierung durch den angesteuerten Steuerungsadapter, Auswählen des durch das markierte Symbol zugeordneten Steuerungsadapters durch den Nutzer als zum Funknetzwerk gehörigen Steuerungsadapter und Erfassen der Auswahl des Symbols des zugeordneten Steuerungsadapters durch das Funknetz-Endgerät.

6. Verfahren nach einem der Ansprüche 4 oder 5, ferner umfassend den Schritt:
- Umkonfigurieren einer Mehrzahl der ausgewählten Steuerungsadapter (100) innerhalb des bestimmten Funknetzes jeweils als Client.

7. Verfahren nach einem der Ansprüche 4 bis 6 weiterhin umfassend den Schritt:
- Verifizieren, bei dem Einrichten des Funknetzwerkes, der Authentizität des jeweils ermittelten Steuerungsadapters (100), insbesondere durch Nutzereingabe bzw. Einlesen eines dem Steuerungsadapter zugewiesenen öffentlichen Schlüssels.

8. Verfahren nach einem der Ansprüche 3 bis 7, weiterhin umfassend den Schritt:
- Speichern eines Zertifikats umfassend einen privaten und einen öffentlichen Schlüssel auf dem/den Steuerungsadapter(n) (100) zur Verschlüsselung von Kommunikationsdaten.

9. Verfahren nach einem der Ansprüche 3 bis 8, nach Fertigstellung der Konfigurierung des Beleuchtungssystems weiterhin umfassend den Schritt:
- Aktualisierung bzw. Erweiterung einer abgespeicherten Beleuchtungssystemvorlage unter Verwendung von Konfigurationsdaten dieses fertiggestellten Beleuchtungssystems
oder
- Abspeichern von Informationen zum fertiggestellten Beleuchtungssystem mit den zugeordneten Konfigurationsdaten als weitere Beleuchtungssystemvorlage.

10. Verfahren nach einem der Ansprüche 3 bis 9, weiterhin umfassend den Schritt:
- Abspeichern von geometrischen Angaben über eine Raumgestaltung wie die Anordnung von zumindest einer Fensterfront und/oder Anordnung zumindest einer Türe sowie Angaben über zumindest eine im Raum angeordnete Gruppierung (G1,..,G4) von Leuchten sowie zumindest einer Sensoreinrichtung (S) und/oder einer Schaltereinrichtung (T) in der zumindest einen Beleuchtungssystemvorlage (V1, V2).

11. Verfahren nach einem der Ansprüche 3 bis 10, nach der Konfiguration der Steuerungsanlage weiterhin umfassend den Schritt:
- Durchführen einer automatischen und programmgesteuerten Verschaltung einer Mehrzahl von Softwaremodulen zur Erzeugung eines Steuerungsprogramms für den zumindest einen Steuerungsadapters in Abhängigkeit der an den Steuerungsadapter angeschlossenen Betriebskomponenten und deren Konfigurierung wie die Gruppierung der Komponenten und/oder die auswählbaren Beleuchtungsszenen.

## Claims

1. System comprising a control system (1) and a radio network terminal for a light system, wherein the control system (1) comprises a control adapter (100) with a digital interface and a digital control bus connected therewith to the control adapter and associated thereto, control bus to which a multitude of light technical operating components such as operating devices, ballasts, sensor devices (24) and/or switching devices (25) can be connected as bus participants by means of a respective digital interface, wherein the control adapter (100) further comprises a controller (130) as well as a radio interface for the data coupling of the control adapter to the radio network terminal, **characterized in that**, for a multitude of lighting system patterns, the respectively comprised light technical operating components and at least a few of the configurations and/or parameterizations associated to the light technical operating components are stored in a memory of the radio network terminal that is readable by the radio network terminal, wherein, in order to configure and commission the lighting system associated to the control system, the at least one control adapter (100) is designed to detect all the light technical operating components connected to the digital interface and to transmit the detected light technical operating components to the radio network terminal, and the radio network terminal is configured to
make a comparison according to predetermined criteria, computer supported, of the detected light technical operating components with those that have been stored to the multitude of lighting system patterns, wherein the radio network terminal is designed either
to identify a lighting system pattern from the multitude of lighting system patterns with a predetermined configuration and/or parameterization of light technical operating components that shows, according to the predetermined criteria, the highest matches with an identified structure of the lighting system and to select the identified lighting system pattern, or
to identify several lighting system patterns from the multitude of lighting system patterns with a respective predetermined configuration and/or parameterization of light technical operating components that show the highest matches according to the predetermined criteria and to list lighting system patterns according to the level of match with respect to the predetermined criteria and to display on a display of the radio network terminal for selection for a user as well as to detect a user input on the display for selection of a lighting system pattern, wherein the radio network terminal is furthermore configured to apply the selected lighting system pattern to a subsequent configuration and/or parameterization of the lighting system by the radio network terminal, wherein the configuration and/or parameterization of the lighting system is carried out computer supported on the radio network terminal according to the selected lighting system pattern.

2. System according to claim 1, **characterized in that** the control system comprises a multitude of control adapters (100) with one digital interface each for connecting to the associated digital control bus, a controller (130) as well as a radio interface, wherein the respective control adapters are configured as participants of the radio network configured as wireless client, wireless base station (wireless access point) and/or as a wireless router, in particular of a WLAN network.

3. Method for configuring a control system of a system according to the claims 1 or 2, **characterized by** the steps:
- setting up a radio network comprising the control adapter (100) as radio network participant on the base of a detected user input at the radio network terminal;
- detection of the light technical operating components connected to the associated digital control bus of the control adapter (100) by the control adapter (100);
- transmission of the detected light technical operating components connected to the control adapter (100) to the radio network terminal;
- comparison of the detected light technical operating components with the light technical operating components of the multitude of stored lighting system patterns according to the predetermined criteria by the radio network terminal, comprising either
identification of the lighting system pattern from the multitude of lighting system patterns with a predetermined configuration and/or parameterization of light technical operating components that shows, according to the predetermined criteria, the highest match with the structure of the lighting system and selection of the identified lighting system pattern by the radio network terminal, or
identification of several lighting system patterns from the multitude of lighting system patterns with a respective predetermined configuration and/or parameterization of light technical operating components that show the highest matches according to the predetermined criteria and listing of lighting system patterns according to the level of match with respect to the predetermined criteria by the radio network terminal,
display of the identified lighting system patterns on the display of the radio network terminal for selection by the user as well as detection of the selection of one of the displayed lighting system patterns by means of user input on the display by the radio network terminal,
- configuration and/or parameterization, processor supported on the radio network terminal, of the lighting system according to the selected lighting system pattern.

4. Method according to claim 3, **characterized in that** the setting up of a radio network comprises the steps:
- scanning a predetermined radio network frequency range by the radio network terminal for identifying radio network participants that are configured as base station (wireless access point) or as wireless router and that can be recognized as control adapters by using data technology, in particular by specification of a unique identification associated to a control adapter (100);
- detection of respectively one user selection by the radio network terminal for selection of the respective control adapter identified by scanning as a control adapter belonging to the radio network part as a subset or of all identified control adapters and configuration of the control adapters selected by the user as radio network participants belonging to the specified radio network.

5. Method according to claim 4, **characterized in that** the step of selection of the control adapter (100) comprises for each control adapter identified by scanning:
- display of the control adapter (100) identified by scanning on the display by an associated symbol;
- marking of a symbol associated to the control adapter on the display of the radio network terminal by the user and detection of the marking of the symbol associated to the control adapter by the radio network terminal;
- triggering of the control adapter associated to the marked symbol for emitting an optical and/or acoustic signal;
- in response to the signalization by the triggered control adapter, selection of the control adapter associated to the marked symbol by the user as control adapter belonging to the radio network and detection of the selection of the symbol of the associated control adapter by the radio network terminal.

6. Method according to one of the claims 4 or 5 further comprising the step:
- reconfiguration of a multitude of the selected control adapters (100) inside the specified radio network respectively as client.

7. Method according to one of the claims 4 to 6 further comprising the step:
- verification during the setting up of the radio network of the authenticity of the respectively identified control adapter (100), in particular by user input or reading of a public key assigned to the control adapter.

8. Method according to one of the claims 3 to 7 further comprising the step:
- storage of a certificate comprising a private and a public key on the control adapter(s) (100) for encrypting communication data.

9. Method according to one of the claims 3 to 8, after completion of the configuration of the lighting system, further comprising the step:
- update or extension of a stored lighting system pattern by using configuration data of this completed lighting system
or
- saving of information about the completed lighting system with the associated configuration data as further lighting system pattern.

10. Method according to one of the claims 3 to 9 further comprising the step:
- saving of geometric information about a room configuration such as the arrangement of at least one window front and/or arrangement of at least one door as well as information about at least one grouping (G1,..., G4) of luminaires arranged in the room as well as at least of one sensor device (S) and/or a switching device (T) in the at least one lighting system pattern (V1, V2).

11. Method according to one of the claims 3 to 10, after the configuration of the control device further comprising the step:
- carrying out of an automatic and program-controlled interconnection of a multitude of software modules for generating a control program for the at least one control adapter depending on the operating components connected to the control adapter and configuration thereof such as grouping of the components and/or the selectable lighting scenes.

## Revendications

1. Système présentant une installation de commande (1) et un terminal de réseau radio pour un système d'éclairage, cependant que l'installation de commande (1) comprend un adaptateur de commande (100) avec une interface numérique et un bus de commande numérique, raccordé par celle-ci à l'adaptateur de commande et associé à celui-ci, auquel une multitude de composants de fonctionnement de technique d'éclairage, comme des appareillages, des ballasts, des dispositifs de détection (24) et/ou des dispositifs de commutation (25), peuvent être raccordés chacun au moyen d'une interface numérique comme participants de bus, cependant que l'adaptateur de commande (100) présente de plus un contrôleur (130) ainsi qu'une interface radio pour le couplage de données de l'adaptateur de commande au terminal de réseau radio, **caractérisé en ce que** les composants de fonctionnement de technique d'éclairage respectivement compris et au moins quelques-unes des configurations et/ou paramétrages associés aux composants de fonctionnement de technique d'éclairage sont mémorisés dans une mémoire du terminal de réseau radio pour une multitude de modèles de systèmes d'éclairage, laquelle mémoire peut être lue par le terminal de réseau radio, cependant que, pour la configuration et la mise en service du système d'éclairage associé à l'installation de commande, le au moins un adaptateur de commande (100) est configuré pour détecter tous les composants de fonctionnement de technique d'éclairage raccordés au bus de commande numérique et pour transmettre les composants de fonctionnement de technique d'éclairage détectés au terminal de réseau radio et le terminal de réseau radio est configuré
pour effectuer, en étant assisté par un processeur, une comparaison selon des critères prédéfinis des composants de fonctionnement de technique d'éclairage détectés avec les composants de fonctionnement de technique d'éclairage mémorisés pour la multitude de modèles de systèmes d'éclairage, le terminal de réseau radio étant agencé pour
soit identifier un modèle de système d'éclairage à partir de la multitude de modèles de systèmes d'éclairage avec une configuration et/ou un paramétrage prédéfini de composants de fonctionnement de technique d'éclairage qui présente, selon les critères prédéfinis, les plus grandes concordances avec une structure identifiée du système d'éclairage et sélectionner le modèle de système d'éclairage identifié,
soit identifier plusieurs modèles de systèmes d'éclairage à partir de la multitude de modèles de systèmes d'éclairage avec respectivement une configuration et/ou un paramétrage prédéfini de composants de fonctionnement qui présentent, selon les critères prédéfinis, les plus grandes concordances et lister des modèles de systèmes d'éclairage selon le niveau de concordance par rapport aux critères prédéfinis et les afficher sur un écran du terminal de réseau radio pour qu'un utilisateur en fasse une sélection ainsi que détecter une saisie d'utilisateur sur l'écran pour la sélection d'un modèle de système d'éclairage,
cependant que le terminal de réseau radio est de plus configuré pour appliquer le modèle de système d'éclairage sélectionné à une configuration et/ou un paramétrage ultérieur du système d'éclairage par le terminal de réseau radio, cependant que la configuration et/ou le paramétrage du système d'éclairage est effectué selon le modèle de système d'éclairage sélectionné sur le terminal de réseau radio en étant assisté par un processeur.

2. Système selon la revendication 1, **caractérisé en ce que** l'installation de commande présente une multitude d'adaptateurs de commande (100) avec chacun une interface numérique pour le raccord au bus de commande numérique associé, un contrôleur (130) ainsi qu'une interface radio, cependant que les adaptateurs de commande respectifs sont configurés comme des participants configurés du réseau radio comme client sans fil, station de base sans fil (point d'accès sans fil) et/ou comme routeur sans fil, en particulier d'un réseau wifi.

3. Procédé pour configurer une installation de commande d'un système selon les revendications 1 ou 2, **caractérisé par** les étapes :
- mise en place d'un réseau radio qui comprend l'adaptateur de commande (100) comme participant du réseau radio sur la base d'une saisie d'utilisateur détectée au terminal du réseau radio ;
- détection par l'adaptateur de commande (100) des composants de fonctionnement de technique d'éclairage raccordés au bus de commande numérique associé de l'adaptateur de commande (100) ;
- transmission au terminal de réseau radio des composants de fonctionnement de technique d'éclairage détectés, raccordés à l'adaptateur de commande (100) ;
- comparaison par le terminal de réseau radio selon des critères prédéfinis des composants de fonctionnement de technique d'éclairage détectés avec les composants de fonctionnement de technique d'éclairage de la multitude de modèles de systèmes d'éclairage mémorisés comprenant soit l'identification du modèle de système d'éclairage à partir de la multitude de modèles de systèmes d'éclairage avec une configuration et/ou un paramétrage prédéfini de composants de fonctionnement de technique d'éclairage qui présente, selon les critères prédéfinis, la plus grande concordance avec la structure du système d'éclairage et la sélection par le terminal de réseau radio du modèle de système d'éclairage identifié,
soit
l'identification de plusieurs modèles de systèmes d'éclairage à partir de la multitude de modèles de systèmes d'éclairage avec respectivement une configuration et/ou un paramétrage prédéfini de composants de fonctionnement de technique d'éclairage qui présentent les plus grandes concordances selon les critères prédéfinis et listage de modèles de systèmes d'éclairage selon le niveau de concordance par rapport aux critères prédéfinis,
- affichage par le terminal de réseau radio des modèles de systèmes d'éclairage identifiés sur l'écran du terminal de réseau radio pour la sélection par l'utilisateur ainsi que détection de la sélection d'un des modèles de systèmes d'éclairage affichés au moyen de la saisie d'utilisateur sur l'écran,
- configuration et/ou paramétrage du système d'éclairage selon le modèle de système d'éclairage sélectionné sur le terminal de réseau radio en étant assisté par un processeur.

4. Procédé selon la revendication 3, **caractérisé en ce que** la configuration d'un réseau radio comprend les étapes :
- balayage d'une gamme de fréquences prédéfinie du réseau radio par le terminal de réseau radio pour identifier des participants au réseau radio qui sont configurés comme station de base (point d'accès sans fil) ou comme routeur sans fil et qui peuvent être reconnus par voie informatique comme adaptateurs de commande, en particulier par l'indication d'un identifiant unique associé à un adaptateur de commande (100) ;
- détection par le terminal du réseau radio respectivement d'une sélection de l'utilisateur pour la sélection de l'adaptateur de commande respectif identifié par balayage comme adaptateur de commande faisant partie d'une partie du réseau radio en tant que sous-ensemble ou de tous les adaptateurs de commande identifiés et configuration des adaptateurs de commande sélectionnés par l'utilisateur comme participants au réseau radio faisant partie du réseau radio spécifique.

5. Procédé selon la revendication 4, **caractérisé en ce que** l'étape de sélection de l'adaptateur de commande (100) comprend pour chaque adaptateur de commande identifié par balayage :
- affichage de l'adaptateur de commande (100) identifié par balayage sur l'écran par un symbole associé ;
- marquage d'un symbole associé à l'adaptateur de commande (100) sur l'écran du terminal de réseau radio par l'utilisateur et détection du marquage du symbole associé à l'adaptateur de commande par le terminal de réseau radio ;
- pilotage de l'adaptateur de commande associé au symbole marqué pour délivrer un signal optique et/ou acoustique ;
- en réponse à la signalisation par l'adaptateur de commande piloté, sélection par l'utilisateur de l'adaptateur de commande associé au symbole marqué comme adaptateur de commande faisant partie du réseau radio et détection de la sélection du symbole de l'adaptateur de commande associé par le terminal de réseau radio.

6. Procédé selon l'une des revendications 4 ou 5 comprenant de plus l'étape :
- reconfiguration d'une multitude des adaptateurs de commande sélectionnés (100) à l'intérieur du réseau radio spécifique respectivement comme client.

7. Procédé selon l'une des revendications 4 à 6 comprenant de plus l'étape :
- vérification, lors de la configuration du réseau radio, de l'authenticité de l'adaptateur de commande (100) respectivement identifié, en particulier par saisie de l'utilisateur ou lecture d'une clé publique affectée à l'adaptateur de commande.

8. Procédé selon l'une des revendications 3 à 7 comprenant de plus l'étape :
- mémorisation d'un certificat qui comprend une clé privée et une clé publique sur le(s) adaptateur(s) de commande (100) pour le cryptage de données de communication.

9. Procédé selon l'une des revendications 3 à 8 comprenant, après l'achèvement de la configuration du système d'éclairage, de plus l'étape :
- actualisation ou extension d'un modèle de système d'éclairage mémorisé en utilisant des données de configuration de ce système d'éclairage terminé
ou
- mémorisation d'informations sur le système d'éclairage terminé avec les données de configuration associées comme autre modèle de système d'éclairage.

10. Procédé selon l'une des revendications 3 à 9 comprenant de plus l'étape :
- mémorisation d'indications géométriques sur une configuration de pièce comme l'arrangement d'au moins une baie vitrée et/ou l'arrangement d'au moins une porte ainsi que d'indications sur au moins un regroupement (G1, ..., G4) placé dans la pièce de luminaires ainsi que d'au moins un dispositif de détection (S) et/ou d'un dispositif de commutation (T) dans le au moins un modèle de système d'éclairage (V1, V2).

11. Procédé selon au moins l'une des revendications 3 à 10 comprenant de plus, après la configuration de l'installation de commande, l'étape :
- exécution d'une interconnexion automatique et commandée par programme d'une multitude de modules de logiciel pour générer un programme de contrôle pour le au moins un adaptateur de commande en fonction des composants de fonctionnement raccordés à l'adaptateur de commande et configuration de ceux-ci ainsi que le regroupement des composants et/ou les scènes d'éclairage pouvant être sélectionnées.
